(19) Europäisches Patentamt
European Patent Office
Office européen des brevets

(11) **EP 3 194 750 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(21) Anmeldenummer: **15754206.9**

(22) Anmeldetag: **25.08.2015**

(51) Int Cl.:
*F02D 41/00* *(2006.01)*  *F02D 41/08* *(2006.01)*
*F02D 41/14* *(2006.01)*  *F02D 41/22* *(2006.01)*

(86) Internationale Anmeldenummer:
**PCT/EP2015/069411**

(87) Internationale Veröffentlichungsnummer:
**WO 2016/041742 (24.03.2016 Gazette 2016/12)**

(54) **VERFAHREN ZUR ERKENNUNG VON DEFEKTEN EINSPRITZDÜSEN EINES VERBRENNUNGSMOTORS**

METHOD FOR DETECTING DEFECTIVE INJECTION NOZZLES OF AN INTERNAL COMBUSTION ENGINE

PROCÉDÉ D'IDENTIFICATION D'INJECTEURS DÉFECTUEUX DANS UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2014 DE 102014218430**

(43) Veröffentlichungstag der Anmeldung:
**26.07.2017 Patentblatt 2017/30**

(73) Patentinhaber: **Bayerische Motoren Werke Aktiengesellschaft**
**80809 München (DE)**

(72) Erfinder: **GRASREINER, Sebastian Dr.**
**81379 München (DE)**

(56) Entgegenhaltungen:
WO-A1-2014/020393    DE-A1- 19 620 038
US-A- 5 585 552       US-A1- 2011 113 756

**Beschreibung**

Die Erfindung betrifft ein Verfahren zur Erkennung von defekten Einspritzdüsen zur Zuführung von Kraftstoff in die Brennkammern eines Verbrennungsmotors, insbesondere in einem Kraftfahrzeug, sowie eine entsprechende Motortesteinrichtung zur Erkennung von defekten Einspritzdüsen.

Verbrennungsmotoren mit Direkteinspritzung umfassen Einspritzdüsen für die Kraftstoffversorgung der einzelnen Brennkammern in den Zylindern. Die Einspritzdüsen sorgen dafür, dass die gewünschte Gemischgüte (Luft-Kraftstoff-Verhältnis) entsprechend den Anforderungen aus dem Motorbetrieb geeignet eingestellt wird.

Einspritzdüsendefekte in Verbrennungsmotoren sind im eingebauten Zustand der Einspritzdüsen häufig schlecht zu identifizieren. Demzufolge werden bei Fehlfunktionen eines Verbrennungsmotors, welche ihre Ursache in defekten Einspritzdüsen haben könnten, diese Düsen oftmals auf Verdacht getauscht. Dies führt in vielen Fällen dazu, dass ein Fehltausch von Einspritzdüsen ohne Defekt vorgenommen wird. Als Konsequenz sind Wiederholreparaturen erforderlich. Ferner steigen die Gewährleistungskosten des Motorherstellers aufgrund unnötiger Reparaturen. Ein Verfahren zur Erkennung von defekten Einspritzdüsen eines Verbrennungsmotors wird im Stand der Technik DE 196 20 038 gezeigt.

Aufgabe der Erfindung ist es, ein Verfahren und eine entsprechende Motortesteinrichtung zu schaffen, mit denen zuverlässig Einspritzdüsendefekte mit einer Aussage über die Art des Defekts erkannt werden können, ohne dass die Einspritzdüsen aus dem Verbrennungsmotor ausgebaut werden müssen.

Diese Aufgabe wird durch das Verfahren gemäß Patentanspruch 1 bzw. die Motortesteinrichtung gemäß Patentanspruch 13 gelöst. Weiterbildungen der Erfindung sind in den abhängigen Ansprüchen definiert.

Das erfindungsgemäße Verfahren dient zur Erkennung von defekten Einspritzdüsen zur Zuführung von Kraftstoff in die Brennkammern eines Verbrennungsmotors, insbesondere in einem Kraftfahrzeug. Der Verbrennungsmotor weist eine oder mehrere Zylinderbänke auf, wobei eine jeweilige Zylinderbank mehrere Zylinder mit jeweils einer darin ausgebildeten Brennkammer und zumindest einer Einspritzdüse umfasst. In einer bevorzugten Ausführungsform ist in jeder Brennkammer genau eine Einspritzdüse vorgesehen. Den Brennkammern einer jeweiligen Zylinderbank wird ein gemeinsamer Luftmassenstrom zugeführt. Ebenso wird von den Brennkammern einer jeweiligen Zylinderbank ein gemeinsamer Abgasstrom abgeführt.

Im Rahmen des erfindungsgemäßen Verfahrens wird eine Anzahl von aufeinander folgenden Testschritten für eine jeweilige Zylinderbank im Leerlaufbetrieb des Verbrennungsmotors durchgeführt. Die Anzahl der Testschritte ist größer als die Anzahl der Zylinder der jeweiligen Zylinderbank. Dies ist erforderlich, da ansonsten das weiter unten beschriebene Gleichungssystem nicht eindeutig gelöst werden kann. In einem jeweiligen Testschritt sind für die einzelnen Einspritzdüsen Gemischfaktoren eingestellt, welche jeweils den durch die einzelne Einspritzdüse bei deren Ansteuerung generierten Kraftstoffmassenstrom festlegen, wobei für zumindest manche und insbesondere alle aufeinander folgenden Testschritte ein oder mehrere Gemischfaktoren von einem Testschritt zum nächsten verändert werden und wobei während der Testschritte Messungen des Lambdawerts des von der Zylinderbank abgeführten Abgasstroms (z. B. mittels einer Lambdasonde) und Messungen des der Zylinderbank zugeführten Luftmassenstroms durchgeführt werden. Mit Hilfe der Messung von Luftmasse (einwärts) und Abgaslambda (auswärts) kann somit eine Bilanzierung der Massen erfolgen. Die Veränderungen der Gemischfaktoren werden insbesondere derart gewählt, dass das unten beschriebene Gleichungssystem eine eindeutige Lösung besitzt. Der Begriff des Lambdawerts (auch als Verbrennungsluftverhältnis bezeichnet) ist an sich bekannt und beschreibt das Luft-Kraftstoff-Verhältnis in Bezug auf das kraftstoffspezifische stöchiometrische Luft-Kraftstoff-Verhältnis.

Nach Durchführung der Anzahl von Testschritten werden ein Normabweichungswert für jede Einspritzdüse sowie ein Gesamtleckagestrom ermittelt. Der Normabweichungswert für eine jeweilige Einspritzdüse beschreibt eine Abweichung des durch die jeweilige Einspritzdüse erzeugten Kraftstoffmassenstroms von einem Normbetriebswert der jeweiligen Einspritzdüse. Unter dem Normbetriebswert einer Einspritzdüse ist hier und im Folgenden der von einer intakten Einspritzdüse erzeugte Wert des Kraftstoffmassenstroms im aktuellen Betriebspunkt zu verstehen. Demgegenüber beschreibt der Gesamtleckagestrom den Kraftstoffmassenstrom, der durch Leckagen aller Einspritzdüsen der jeweiligen Zylinderbank verursacht ist.

Im erfindungsgemäßen Verfahren erfolgt die Ermittlung der Normabweichungswerte für die jeweiligen Einspritzdüsen und des Gesamtleckagestroms derart, dass ein Gleichungssystem rechnergestützt gelöst wird, welches für einen jeweiligen Testschritt eine Gleichung umfasst. Diese Gleichung bilanziert die Normabweichungswerte und den Gesamtleckagestrom in Abhängigkeit von:

- den im jeweiligen Testschritt eingestellten Gemischfaktoren,
- einem für den jeweiligen Testschritt gültigen und aus den Messungen des Lambdawerts abgeleiteten Lambdawert des von der Zylinderbank abgeführten Abgasstroms und
- einem für den jeweiligen Testschritt gültigen und aus den Messungen des Luftmassenstroms abgeleiteten Luftmassenstrom, welcher der Zylinderbank zugeführt wird.

Der für den jeweiligen Testschritt gültige Lambdawert bzw. Luftmassenstrom kann je nach Ausgestaltung des Verfahrens unterschiedlich aus den entsprechenden Messungen abgeleitet werden. Werden in einem einzelnen Testschritt mehrere Messungen des Lambdawerts bzw. des Luftmassenstroms durchgeführt, kann der im jeweiligen Testschritt gültige Lambdawert bzw. Luftmassenstrom durch Mittelung dieser Messwerte bestimmt werden. In Bezug auf den Luftmassenstrom kann ggf. auch davon ausgegangen werden, dass dieser innerhalb der Anzahl von Testschritten konstant bleibt, so dass ein für alle Testschritte gültiger Luftmassenstrom verwendet wird, der eine Mittelung der Messwerte des Luftmassenstroms über alle Testschritte hinweg darstellt. Gegebenenfalls besteht auch die Möglichkeit, dass in einem einzelnen Testschritt immer nur einmal der Luftmassenstrom bzw. der Lambdawert gemessen wird. Die im jeweiligen Testschritt gültigen Werte fallen dann mit den entsprechenden gemessenen Werten zusammen.

Nachdem die Normabweichungswerte und der Gesamtleckagestrom ermittelt wurden, wird im erfindungsgemäßen Verfahren ein erster Einspritzdüsendefekt in der jeweiligen Zylinderbank in der Form einer Einspritzmengenabweichung zumindest einer Einspritzdüse detektiert, falls zumindest ein Normabweichungswert für eine jeweilige Einspritzdüse außerhalb eines vorbestimmten Wertebereichs liegt. Ferner wird ein zweiter Einspritzdüsendefekt in der jeweiligen Zylinderbank in der Form einer Leckage zumindest einer Einspritzdüse detektiert, falls der Gesamtleckagestrom größer als sein vorbestimmter Schwellwert bzw. Maximalwert ist. Geeignete Wertebereiche bzw. Schwellwerte können durch einen Fachmann problemlos festgelegt werden. In der speziellen Beschreibung finden sich bevorzugte Werte für den Schwellwert bzw. den Wertebereich. Ein detektierter erster bzw. zweiter Einspritzdüsendefekt wird vorzugsweise über eine Benutzerschnittstelle ausgegeben bzw. in einem entsprechenden digitalen Speicher zum späteren Auslesen hinterlegt.

Das erfindungsgemäße Verfahren weist den Vorteil auf, dass auf einfache Weise durch mehrmalige Verstellung des Kraftstoffgemischs nicht nur Einspritzdüsendefekte detektiert werden können, sondern auch unterschieden werden kann, ob eine Einspritzmengenabweichung und/oder eine Leckage das Fehlerbild des Defekts sind. Eine Einspritzmengenabweichung unterscheidet sich von dem Defekt der Leckage dahingehend, dass die Einspritzmengenabweichung nur bei eingeschalteter Einspritzdüse (d.h. bei Einspritzung von Kraftstoff durch die Düse) auftritt, wohingegen die Leckage auch dann vorhanden ist, wenn die Einspritzdüse abgeschaltet ist und keinen Kraftstoff einspritzen soll.

In einer bevorzugten Ausführungsform wird in dem erfindungsgemäßen Verfahren auch ausgegeben, für welche Einspritzdüsen der Normabweichungswert außerhalb des vorbestimmten Wertebereichs liegt. Diese Einspritzdüsen werden als defekt detektiert. Auf diese Weise erhält man auch die Zuordnung des Defekts der Einspritzmengenabweichung zur den entsprechenden Einspritzdüsen. Die Ausgabe von Einspritzdüsen mit einem Normabweichungswert außerhalb des vorbestimmten Wertebereichs kann z.B. über eine Benutzerschnittstelle erfolgen. Unter einer Ausgabe kann jedoch auch eine Speicherung der entsprechenden Information in einem digitalen Speicher verstanden werden, der zum späteren Zeitpunkt ausgewertet werden kann.

In einer bevorzugten Ausführungsform stellen die obigen Normabweichungswerte jeweils einen prozentualen Faktor dar, der durch Multiplikation mit dem Normbetriebswert den durch die jeweilige Einspritzdüse erzeugten Kraftstoffmassenstrom liefert. In einer weiteren bevorzugten Ausführungsform repräsentieren die Gemischfaktoren jeweils eine Gemischvertrimmung in der Form eines prozentualen Faktors, der durch Multiplikation mit dem von der jeweiligen Einspritzdüse im Normalbetrieb des Verbrennungsmotors erzeugten Kraftstoffmassenstrom den tatsächlichen Kraftstoffmassenstrom der jeweiligen Einspritzdüse liefert. Unter Normalbetrieb des Verbrennungsmotors ist der Betrieb ohne Messeingriff, d.h. ohne Gemischvertrimmung zu verstehen. Mit anderen Worten entspricht der Normalbetrieb einer Gemischvertrimmung mit dem prozentualen Faktor von 1 bzw. 100 %.

In einer weiteren Ausgestaltung des erfindungsgemäßen Verfahrens umfasst eine jeweilige Gleichung des Gleichungssystems ferner ein gewünschtes Luft-Kraftstoff-Verhältnis (d.h. ein Soll-Luft-Kraftstoff-Verhältnis) bei einer Kraftstoffverbrennung in einer Brennkammer. In einer weiteren Variante umfasst eine jeweilige Gleichung des Gleichungss ystems ferner einen Gemischanpassungsparameter für jede Einspritzdüse, der den durch die jeweilige Einspritzdüse bei deren Ansteuerung generierten Kraftstoffmassenstrom zur Erreichung von Laufruhe des Verbrennungsmotors anpasst. Solche Gemischanpassungsparameter sind bei der Steuerung eines Verbrennungsmotors an sich bekannt und können in der Regel aus dem Motorsteuergerät ausgelesen werden. Nichtsdestotrotz kann das erfindungsgemäße Verfahren auch für Verbrennungsmotoren verwendet werden, welche keine Gemischanpassung mit Hilfe eines Gemischanpassungsparameters vornehmen. Dann ist der Satz der Gemischanpassungsparameter mit jeweils 1 bzw. 100% gleichzusetzen.

In einer besonders bevorzugten Variante des erfindungsgemäßen Verfahrens lautet eine jeweilige Gleichung des Gleichungssystems wie folgt:

$$\sum_i (gv_i \cdot cb_i \cdot o_i) + \frac{L_{st} \cdot \lambda_{soll} \cdot M}{MSHFM} \cdot L_{0,sum} = \frac{M}{\lambda_{real,k}}$$

wobei i = 1, ..., M die Einspritzdüsen aus der Anzahl von M Einspritzdüsen der jeweiligen Zylinderbank indiziert;

wobei $gv_i$ die im entsprechenden Testschritt eingestellten Gemischfaktoren in der Form einer Gemischvertrimmung repräsentieren, welche ein prozentualer Faktor ist, der durch Multiplikation mit dem von der jeweiligen Einspritzdüse im Normalbetrieb des Verbrennungsmotors erzeugten Kraftstoffmassenstrom den tatsächlichen Kraftstoffmassenstrom der jeweiligen Einspritzdüse liefert;

wobei alle $cb_i$ auf den Wert 1 gesetzt sind oder wobei ein jeweiliges $cb_i$ ein Gemischanpassungsparameter für eine jeweilige Einspritzdüse ist, der den durch die jeweilige Einspritzdüse bei deren Ansteuerung generierten Kraftstoffmassenstrom zur Erreichung von Laufruhe des Verbrennungsmotors anpasst;

wobei $o_i$ der Normabweichungswert für eine jeweilige Einspritzdüse ist, der einen prozentualen Faktor darstellt, der durch Multiplikation mit dem Normbetriebswert der jeweiligen Einspritzdüse den durch die jeweilige Einspritzdüse erzeugten Kraftstoffmassenstrom liefert;

wobei $L_{st} \cdot \lambda_{soll}$ ein gewünschtes und für alle Brennkammern identisches Luft-Kraftstoff-Verhältnis bei einer Kraftstoffverbrennung in der Brennkammer ist und dabei $L_{st}$ das stöchiometrische Luft-Kraftstoff-Verhältnis und $\lambda_{soll}$ einen gewünschten Lambdawert der Kraftstoffverbrennung in der Brennkammer repräsentiert;

wobei MSHFM der für den jeweiligen Testschritt gültige Luftmassenstrom der gesamten Zylinderbank ist;

wobei $L_{0,sum}$ der Gesamtleckagestrom aller Einspritzdüsen dieser Zylinderbank ist;

wobei $\lambda_{real,k}$ der für den jeweiligen Testschritt gültige Lambdawert ist.

In einer weiteren bevorzugten Variante wird das im Verfahren verarbeitete Gleichungssystem über eine Matrizenrechnung gelöst. Hierdurch wird eine robuste Lösung der Gleichungen sichergestellt. Um eine genaue und eindeutige Lösung des Gleichungssystems zu erhalten, sind die Gemischfaktoren für die jeweiligen Testschritte vorzugsweise derart eingestellt, dass nach Durchlaufen der Testschritte jede Einspritzdüse zumindest einmal keinen Kraftstoffmassenstrom erzeugt (d.h. ausgeschaltet ist), zumindest einmal einen Kraftstoffmassenstrom erzeugt, der größer als ein von der jeweiligen Einspritzdüse im Normalbetrieb des Verbrennungsmotors erzeugter Kraftstoffstrom ist (d.h. die Düse spritzt zu fett ein), und zumindest einmal einen Kraftstoffmassenstrom erzeugt, der kleiner als ein von der jeweiligen Einspritzdüse im Normalbetrieb des Verbrennungsmotors erzeugter Kraftstoffmassenstrom ist (d.h. die Düse spritzt zu mager ein). Zusätzlich oder alternativ sind die Gemischfaktoren für die jeweiligen Testschritte vorzugsweise derart eingestellt, dass zumindest ein Testschritt existiert, in dem alle Einspritzdüsen einen Kraftstoffmassenstrom erzeugen, der einem von der jeweiligen Einspritzdüse im Normalbetrieb des Verbrennungsmotors erzeugten Kraftstoffmassenstrom entspricht (d.h. die Düsen spritzen unvertrimmt ein) und/oder dass auf einen Testschritt, in dem zumindest eine Einspritzdüse keinen Kraftstoffmassenstrom erzeugt, ein Testschritt folgt, indem jede Einspritzdüse einen Kraftstoffmassenstrom erzeugt. Auf diese Weise wird sichergestellt, dass die einzelnen Einspritzdüsen alle Abschnitte ihrer Einspritzmengenkennlinie durchlaufen, so dass eine zuverlässige Detektion von Einspritzdüsendefekten gewährleistet ist.

In einer weiteren Variante des erfindungsgemäßen Verfahrens besteht ferner die Möglichkeit, im Falle der Detektion einer Leckage zu ermitteln, welche der Einspritzdüsen ein Leck aufweisen. Hierzu werden für jede Einspritzdüse die folgenden Schritte durchgeführt:

- der Gemischfaktor für die jeweilige Einspritzdüse wird sukzessive ausgehend von einem Normalwert, der dem von der jeweiligen Einspritzdüse im Normalbetrieb des Verbrennungsmotors erzeugten Kraftstoffmassenstrom entspricht, hin zu Werten mit erhöhtem eingespritzten Kraftstoffanteil der jeweiligen Einspritzdüse verändert, wohingegen die Gemischfaktoren der anderen Einspritzdüsen auf dem Normalwert gehalten werden;
- für den Normalwert und jeden veränderten Wert des Gemischfaktors der jeweiligen Einspritzdüse wird die Laufunruhe des Verbrennungsmotors (ausreichend lang) gemessen;
- als ein Zielwert des veränderten Gemischfaktors wird derjenige Wert des veränderten Gemischfaktors bestimmt, bei dem im Wesentlichen die gleiche Lau funruhe wie für den Normalwert des Gemischfaktors auftritt;
- falls der Zielwert außerhalb eines vorgegebenen Wertebereichs liegt, der Lambdawerten für den Brennkammer-Abgasstrom entspricht, welche größer als ein vorbestimmter Schwellwert sind, wird die jeweilige Einspritzdüse als defekt detektiert, wobei der Brennkammer-Abgasstrom der Abgasstrom der einzelnen Brennkammer ist, in der sich die jeweilige Einspritzdüse befindet.

Liegt der Zielwert innerhalb des vorgegebenen Wertebereichs, wird kein Leckagedefekt der jeweiligen Einspritzdüse detektiert. Die Erfassung der Laufunruhe von Verbrennungsmotoren mit entsprechenden Messverfahren ist an sich bekannt und wird deshalb nicht näher beschrieben. Die soeben beschriebene Ausführungsform macht sich die Erkenntnis zunutze, dass über einen Zusammenhang der Laufunruhe mit der Gemischeinspritzung zu fette Einspritzgemische und damit Leckagen detektiert werden können. In einer bevorzugten Variante wird der obige vorgegebene Wertebereich über eine vorgegebene Funktion bestimmt, welche den Zusammenhang zwischen dem Laufruhewert und dem Lambdawert für den Brennkammer-Abgasstrom bzw. dem Gemischfaktor für die jeweilige Einspritzdüse modelliert. Die vorbestimmte Funktion ist vorzugsweise eine Parabel.

Neben dem oben beschriebenen Verfahren betrifft die Erfindung ferner eine Motortesteinrichtung zur Erkennung von defekten Einspritzdüsen zur Zuführung von Kraftstoff in die Brennkammern eines Verbrennungsmotors. Die Motortesteinrichtung ist zur Durchführung des erfindungsgemäßen Verfahrens bzw. einer oder mehrerer bevorzugter Varianten des erfindungsgemäßen Verfahrens eingerichtet. Die Motortesteinrichtung kann z.B. ein externes Motortestgerät sein bzw. ggf. auch im Kraftfahrzeug integriert sein.

Die Erfindung betrifft ferner ein Kraftfahrzeug mit Verbrennungsmotor und Einspritzdüsen zur Zuführung von Kraftstoff in die Brennkammern des Verbrennungsmotors, wobei das Kraftfahrzeug die oben beschriebene Motortesteinrichtung umfasst.

Ausführungsbeispiele der Erfindung werden nachfolgend anhand der beigefügten Figuren detailliert beschrieben.

Es zeigen:

Fig. 1    ein Ablaufdiagramm, welches eine Ausführungsform des erfindungsgemäßen Verfahrens verdeutlicht; und

Fig. 2    ein Diagramm, welches die Bestimmung von Einspritzdüsen mit einer Leckage gemäß einer Variante der Erfindung verdeutlicht.

Die nachfolgend beschriebene Ausführungsform des erfindungsgemäßen Verfahrens beruht auf einer einfachen physikalischen Modellierung einzelner Einspritzdüsen (im Folgenden auch als Injektoren bezeichnet) in einer Zylinderbank eines Verbrennungsmotors eines Kraftfahrzeugs. Mit dieser Modellierung werden mathematische Gleichungen aufgestellt, bei denen die Fehlerbilder der Injektoren als unbekannte Variablen agieren. Die Gleichungen werden basierend auf einer Anzahl von Testschritten mit Messdaten befüllt, mit denen dann nach den unbekannten Variablen aufgelöst werden kann, wodurch eine genaue Zuordnung des jeweiligen Fehlerbilds erfolgt. Bevor Einzelheiten des Messablaufs erläutert werden, wird zunächst die der Erfindung zugrunde liegende physikalische Modellierung beschrieben.

Im Rahmen der Modellierung wird ein Verbrennungsmotor betrachtet, der zumindest eine Zylinderbank mit M Zylindern und darin ausgebildeten Brennkammern aufweist. Eine Zylinderbank zeichnet sich durch einen gemeinsamen, allen Zylindern der Bank zugeführten Luftmassenstrom aus, der über einen Luftmassenmesser (z.B. einen Heißfilmluftmassenmesser) erfasst wird, sowie durch einen gemeinsamen Abgasstrom aller Zylinder der Bank, dessen Lambdawert über eine gemeinsame Lambdasonde für alle Zylinder bestimmt wird. Ohne Beschränkung der Allgemeinheit wird im Folgenden ein Verbre n-nungsmotor mit einem einzelnen Injektor pro Zylinder der Zylinderbank betrachtet.

Der theoretische Kraftstoffmassenstrom $\dot{m}_{K,th}$ in kg/h, der von einem jeweiligen Injektor der Zylinderbank bei seiner Ansteuerung erzeugt wird, lässt sich wie folgt beschreiben:

$$\dot{m}_{K,th} = \frac{MSHFM}{M} \cdot \frac{1}{L_{st} \cdot \lambda_{soll}} \qquad (1)$$

Dabei bezeichnet MSHFM den der Zylinderbank zugeführten Luftmassenstrom, M entspricht der Anzahl an Zylindern bzw. Injektoren (z.B. M = 4), $L_{st}$ ist das stöchiometrische Luft-Kraftstoff-Verhältnis bei der Verbrennung in der entsprechenden Brennkammer und $\lambda_{soll}$ ist der gewünschte Soll-Lambdawert (auch als Verbrennungsluftverhältnis bezeichnet) der Verbrennung, gemessen im Abgasstrom der entsprechenden Zylinderban k..

Im Folgenden wird äquivalent zum Begriff des Kraftstoffmassenstroms auch der Begriff Kraftstoffstrom verwendet. Der reale Kraftstoffstrom eines Injektors ergibt sich aus dem theoretischen Kraftstoffstrom wie folgt:

$$\dot{m}_{K,real} = o \cdot \dot{m}_{K,th}$$

Dabei bezeichnet o die Kennlinienabweichung des Injektors bei einem entsprechenden Defekt, o ist ein prozentualer Faktor, der die Abweichung des realen Kraftstoffstroms gegenüber dem theoretischen Kraftstoffstrom repräsentiert. Für o = 1 entspricht der reale Kraftstoffstrom dem theoretischen Kraftstoffstrom, so dass der entsprechende Injektor keinen Kennlinien-Defekt aufweist. Bei o < 1 erzeugt der entsprechende Injektor ein zu mageres Gemisch mit zu geringem Kraftstoffanteil. Entsprechend erzeugt der Injektor bei o > 1 ein zu fettes Gemisch mit zu großem Kraftstoffanteil.

Der soeben beschriebene reale Kraftstoffstrom tritt im Normalbetrieb des Verbrennungsmotors auf, d.h. in einem Betrieb, in dem kein Testeingriff an dem Motor erfolgt. Im Rahmen des weiter unten näher beschriebenen Testablaufs kann dieser reale Kraftstoffstrom vertrimmt werden, was durch eine geeignete Einstellung eines prozentualen Faktors gv erreicht wird, der im Folgenden auch als Gemischvertrimmung bezeichnet wird. Dabei lautet der vertrimmte, reale Kraftstoffstrom des Injektors wie folgt:

$$gv \cdot o \cdot \dot{m}_{K,th}$$

gv = 1 bedeutet, dass der Injektor unvertrimmt einspritzt, gv < 1 bedeutet, dass der Injektor mager einspritzt, und gv > 1 bedeutet, dass der Injektor fett einspritzt. In der hier beschriebenen Ausführungsform wird ein Verbrennungsmotor betrachtet, bei dem der Kraftstoffstrom ferner über einen prozentualen Anpassungsfaktor in der Form eines sog. Cylinder-Balancing-Faktors adaptiert wird. Dieser Faktor wird durch die Motorsteuerung bestimmt und dient dazu, eine hohe Laufruhe des Verbrennungsmotors zu erreichen.

Unter Berücksichtigung des Cylinder-Balancing-Faktors, der im Folgenden als cb bezeichnet wird, ergibt sich der reale vertrimmte Kraftstoffstrom eines Injektors wie folgt:

$$gv \cdot cb \cdot o \cdot \dot{m}_{K,th}$$

cb = 1 bedeutet, dass keine Adaption des Kraftstoffstroms des Injektors stattfindet, cb < 1 bedeutet, dass der Kraftstoffstrom abgemagert wird, und cb > 1 bedeutet, dass der Kraftstoffstrom angefettet wird. Im Rahmen der Modellierung des Injektors wird ferner eine reale Injektorleckage betrachtet, welche einen Leckage strom $L_0$ von über eine Leckage austretendem Kraftstoffstrom darstellt. Der Leckagestrom ist in kg/h angegeben.

Insgesamt kann somit der reale Kraftstoffstrom eines Injektors wie folgt modelliert werden:

$$gv \cdot cb \cdot o \cdot \dot{m}_{K,th} + L_0 = gv \cdot cb \cdot o \cdot \left( \frac{MSHFM}{M} \cdot \frac{1}{L_{st} \cdot \lambda_{soll}} \right) + L_0$$

Dabei wurde der Kraftstoffstrom $\dot{m}_{K,th}$ durch den Ausdruck der obigen Gleichung (1) ersetzt.

Ohne Beschränkung der Allgemeinheit wird angenommen, dass der Verbrennungsmotor stöchiometrisch verbrennen soll, d.h. es gilt $\lambda_{soll}$ = 1. Hieraus ergibt sich insgesamt der reale Kraftstoffstrom unter Berücksichtigung der Vertrimmung und des Cylinder-Balancing-Faktors wie folgt:

$$\dot{m}_{K,real} = gv \cdot cb \cdot o \cdot \frac{MSHFM}{M \cdot L_{st}} + L_0 \qquad (2)$$

Im Folgenden werden nun die Massenströme der einzelnen Injektoren der entsprechenden Zylinderbank betrachtet, so dass der Index i eingeführt wird, der einen entsprechenden Injektor bzw. den zugeordneten Zylinder bzw. die zugeordnete Brennkammer in der Zylinderbank bezeichnet.

Für eine Zylinderbank wird für alle Massenströme der Zylinder, die in einem Abgasstrang zusammengeführt werden, ein Lambdawert $\lambda_{real}$ über eine Lambdasonde ermittelt. Aufgrund der Massenerhaltung ergeben sich die an der Lambdasonde vorhandenen realen Massenströme wie folgt:

$$\sum_i \dot{m}_{K,real,i} + \sum_i \dot{m}_{L,i}$$

Dabei bezeichnet $\dot{m}_{K,real,i}$ den Kraftstoffstrom eines jeweiligen Injektors und $\dot{m}_{L,i}$ den einem jeweiligen Zylinder zugeführten Luftmassenstrom. Hier und im Folgenden bezeichnen die Summen über den Index i eine Summation über die Zylinder der Zylinderbank.

Aus den obigen, an der Lambdasonde vorhandenen Massenströmen ergibt sich der Lambdawert $\lambda_{real}$ wie folgt:

$$\lambda_{real} = \frac{\sum_i \dot{m}_{L,i}}{L_{st} \cdot \sum_i \dot{m}_{K,real,i}} \qquad (3)$$

Indem der Kraftstoffstrom aus obiger Gleichung (2) in die Gleichung (3) eingesetzt wird, ergibt sich folgender Lambdawert an der Lambdasonde:

$$\lambda_{real} = \frac{MSHFM}{L_{st} \cdot \left( \frac{MSHFM}{M \cdot L_{st}} \cdot \sum_i (gv_i \cdot cb_i \cdot o_i) + \sum_i L_{0,i} \right)}$$

In dieser Gleichung wurde ferner berücksichtigt, dass $MSHFM = \sum_i \dot{m}_{l,i}$ gilt.

Über eine Umformung sowie die Verwendung des Ausdrucks $L_{0,sum} = \sum_i L_{0,i}$ kann $\lambda_{real}$ wie folgt geschrieben werden:

$$\lambda_{real} = \frac{M}{\left( \sum_i (gv_i \cdot cb_i \cdot o_i) + \frac{L_{st} \cdot M}{MSHFM} \cdot L_{0,sum} \right)} \qquad (4)$$

Durch eine Umstellung der Gleichung (4) ergibt sich die nachfolgende Basisgleichung, welche im Rahmen der hier beschriebenen Ausführungsform zur Detektion von defekten Einspritzdüsen verwendet wird:

$$\sum_i (gv_i \cdot cb_i \cdot o_i) + \frac{L_{st} \cdot M}{MSHFM} \cdot L_{0,sum} = \frac{M}{\lambda_{real}} \qquad (5)$$

Wie nachfolgend näher beschrieben, wird die obige Gleichung (5) für mehrere Testschritte mit unterschiedlich eingestellten Gemischvertrimmungen $gv_i$ aufgestellt, aus denen unterschiedliche Lambdawerte folgen. Dabei werden N Testschritte betrachtet, wobei N größer als die Anzahl M der Zylinder ist. Auf diese Weise enthält man ein Gleichungssystem mit N Gleichungen (5), aus dem die Unbekannten in der Form der M Kennlinienabweichungen $o_i$ sowie des Gesamtleckagestroms $L_{0,sum}$ bestimmbar sind. Der Luftmassenstrom MSHFM ist in diesem Gleichungssystem der über den gesamten Testverlauf der einzelnen Testschritte gemessene und gemittelte Luftmassenstrom, der näherungsweise als konstant angenommen wird. Der nachfolgend verwendete Lambdawert $\lambda_{real,k}$ ist der für den jeweiligen Testschritt k (k = 1, ..., N) bestimmte Lambdawert $\lambda_{real}$ und stellt den Mittelwert der im Zeitraum des jeweiligen Testschritts gemessenen einzelnen Lambdawerte dar. Die einzelnen Cylinder-Balancing-Faktoren $cb_i$ können aus dem Motorsteuergerät ausgelesen werden.

Entsprechend den obigen Ausführungen ergibt sich somit aus den obigen Gleichungen ein lineares Gleichungssystem aus N Gleichungen, das in Matrixschreibweise wie folgt lautet:

$$M_{gv} \cdot V_o = V_\lambda \qquad (6)$$

Dabei bezeichnet $M_{gv}$ die vorgegebene Testmatrix, welche den Aufbau des Tests definiert und die Dimension N x (M+1) hat.

Nachfolgend wird ohne Beschränkung der Allgemeinheit eine Zylinderbank mit M=4 Zylindern betrachtet. Die Testmatrix ist dann eine N x 5 Matrix, die wie folgt lautet:

$$M_{gv} = \begin{pmatrix} gv_{1,1} & gv_{1,2} & gv_{1,3} & gv_{1,4} & 1 \\ gv_{2,1} & gv_{2,2} & gv_{2,3} & gv_{2,4} & 1 \\ gv_{3,1} & gv_{3,2} & gv_{3,3} & gv_{3,4} & 1 \\ \dots & \dots & \dots & \dots & 1 \\ gv_{N,1} & gv_{N,2} & gv_{N,3} & gv_{N,4} & 1 \end{pmatrix}$$

Eine entsprechende Zeile k bezieht sich dabei auf den k-ten Testschritt und eine entsprechende Spalte i auf den Zylinder i. Somit werden durch die Werte $gv_{k,i}$ die entsprechend eingestellten Vertrimmungen der einzelnen Zylinder i in den jeweiligen Testschritten k bezeichnet. Die Vertrimmung wird dabei durch entsprechende Anpassung der Einspritzzeit der jeweiligen Einspritzdüse erreicht. $gv_{k,i} = 0$ bedeutet, dass der entsprechende Injektor keinen Kraftstoff einspritzt und somit ausgeschaltet ist. Demgegenüber bedeutet $gv_{k,i} < 1$, dass der entsprechende Injektor magerer einspritzt, während $gv_{k,i} > 1$ bedeutet, dass der entsprechende Injektor fetter einspritzt. $gv_{k,i} = 1$ stellt den unvertrimmten Zustand des Injektors ohne äußeren Vertrimmeingriff dar.

Wie sich aus den Ausführungen weiter unten ergibt, wird durch die letzte Spalte der obigen Matrix $M_{gv}$ der Gesamtleckagestrom in das lineare Gleichungssystem einbezogen.

In einem konkreten Beispiel bedeutet in der obigen Matrix $M_{gv}$ eine zweite Matrixzeile (1,3 0 1,3 1,3 1), dass im zweiten Testschritt die Zylinder 1, 3 und 4 30% fetter eingestellt sind und der Zylinder 2 ausgeschaltet ist.

In der obigen Matrixgleichung (6) stellt der Vektor $V_o$ den Defektvektor der Injektoren der betrachteten Zylinderbank dar, nach welchem aufgelöst werden soll. Dieser Vektor lautet wie folgt:

$$V_o = \begin{pmatrix} E_{o1} \\ E_{o2} \\ E_{o3} \\ E_{o4} \\ E_{Lo,sum} \end{pmatrix} = \begin{pmatrix} cb_1 \cdot o_1 \\ cb_2 \cdot o_2 \\ cb_3 \cdot o_3 \\ cb_4 \cdot o_4 \\ L_{st} \cdot 4 \big/ MSHFM \cdot L_{0,sum} \end{pmatrix} \qquad (7)$$

Wie bereits oben erwähnt, bezeichnen $o_1$ bis $o_4$ die entsprechenden Kennlinienabweichungen des jeweiligen Injektors, wobei ein Wert der Kennlinienabweichung von größer 1 bedeutet, dass der Injektor zu fett einspritzt, ein Wert von 1 bedeutet, dass der Injektor ordnungsgemäß einspritzt, und ein Wert von kleiner 1 bedeutet, dass der Injektor zu mager einspritzt. Wie ebenfalls oben erwähnt, bezeichnet $L_{0,sum}$ die Summe der Leckagen aller Injektoren auf einer Bank in kg/h. Ferner sind die Faktoren $cb_1$ bis $cb_4$ die entsprechenden Cylinder-Balancing-Faktoren, die aus dem Motorsteuergerät ausgelesen werden können. $L_{st}$ ist das bereits oben definierte stöchiometrische Luft-Kraftstoff-Verhältnis, das je nach Verbrennungsmotor z.B. zwischen 14 und 15 kg/kg liegt. MSHFM ist der über den gesamten Testverlauf gemessene und ermittelte Luftmassenstrom über den Heißfilmluftmassenmesser.

In der obigen Matrixgleichung (6) bezeichnet $V_\lambda$ den Vektor aus den zu den Testschritten gehörigen Lambdawerten $\lambda_{real,k}$. Dieser Vektor lautet wie folgt:

$$V_\lambda = \begin{pmatrix} 4 / \lambda_{real,1} \\ 4 / \lambda_{real,2} \\ 4 / \lambda_{real,3} \\ ... \\ 4 / \lambda_{real,N} \end{pmatrix}$$

Im Rahmen der hier beschriebenen Ausführungsform wird über eine Matrixoperation mit Hilfe der transponierten Matrix $M_{gv}^T$ die obige Gleichung (6) wie folgt umgeformt:

$$M_{gv}^{\;T} \cdot M_{gv} \cdot V_o = M_{gv}^{\;T} \cdot V_\lambda$$

Hieraus wird über eine Matrixoperation mit einer inversen Matrix der Vektor $V_o$ wie folgt bestimmt:

$$V_o = \left( M_{gv}^{\;T} \cdot M_{gv} \right)^{-1} \cdot \left( M_{gv}^{\;T} \cdot V_\lambda \right)$$

Aus diesem Vektor können nun die einzelnen Kennlinienabweichungen sowie der Gesamtleckagestrom unter Berücksichtigung der obigen Gleichung (7) wie folgt bestimmt werden:

$$o_1 = \frac{E_{o1}}{cb_1}$$

$$...$$

$$o_i = \frac{E_{oi}}{cb_i}$$

$$...$$

$$L_{0,sum} = \frac{E_{L0,sum}}{\left(L_{st} \cdot 4 / MSHFM\right)}$$

Liegt die Kennlinienabweichung eines Injektors außerhalb eines vorgegebenen Wertebereichs, wird dieser Injektor dahingehend als defekt eingestuft, dass er eine Einspritzmengenabweichung aufweist. Eine Einspritzmengenabweichung unterscheidet sich von einer Leckage, denn die Einspritzmengenabweichung tritt nur bei Ansteuerung bzw. im Betrieb des Injektors auf, wohingegen die Leckage auch bei abgeschaltetem Injektor vorliegt und deswegen durch eine Gemischvertrimmung unveränderlich bleibt. Darüber hinaus ist ein Schwellwert für den Gesamtleckagestrom $L_{0,sum}$ gegeben. Wird dieser Schwellwert überschritten, wird eine Einspritzleckage detektiert, welche jedoch zunächst keinem bestimmten Injektor zugeordnet werden kann. In einer speziellen Variante des erfindungsgemäßen Verfahrens können jedoch die Injektoren identifiziert werden, welche ein Leck aufweisen, wie weiter unten noch näher beschrieben wird.

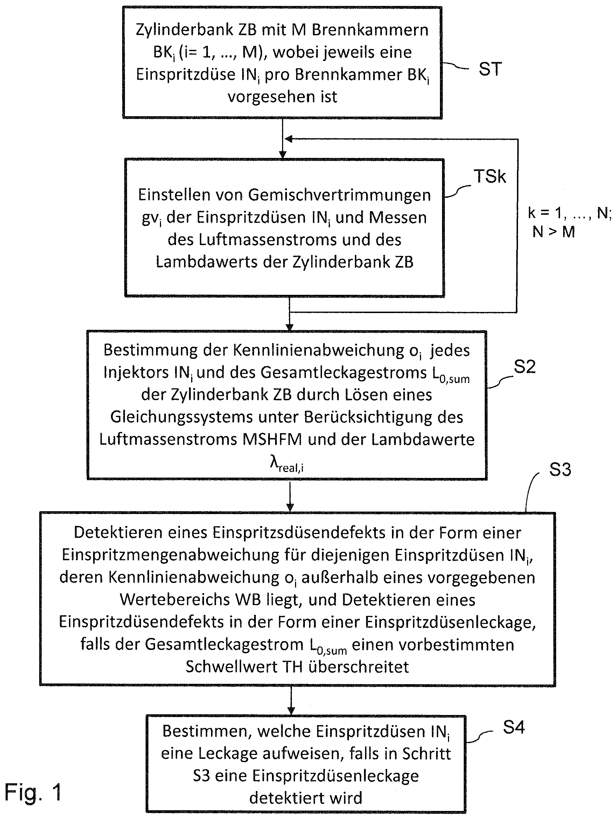

Fig. 1 fasst in einem Ablaufdiagramm nochmals die wesentlichen Schritte des gerade beschriebenen Verfahrens zusammen. Ausgangspunkt ist eine Zylinderbank ZB mit M Brennkammern $BK_i$, wobei jeweils eine Einspritzdüse $IN_i$ pro Brennkammer $BK_i$ vorgesehen ist. Dieser Ausgangspunkt ist in Fig. 1 mit ST bezeichnet. Im Rahmen des Testablaufs werden in jeweiligen Testschritten TSk (k = 1, ..., N, N > M) die Gemischvertrimmungen der Einspritzdüsen $IN_i$ verändert und gleichzeitig der Luftmassenstrom, der der Zylinderbank ZB zugeführt wird, sowie der Lambdawert des von der Bank abgeführten Abgases gemessen. Hieraus ergibt sich durch Mittelung der Messwerte der Luftmassenstromwert MSHFM, der näherungsweise als konstant angenommen wird, sowie ein für den jeweiligen Testschritt TSk gültiger Lambdawert $\lambda_{real,k}$.

Nach Durchführung der N Testschritte wird in einem Schritt S2 die Kennlinienabweichung $o_i$ jedes Injektors $IN_i$ und der Gesamtleckagestrom $L_{0,sum}$ der Zylinderbank ZB durch Lösen eines Gleichungssystems basierend auf den oben dargelegten Matrixoperationen bestimmt. Dabei fließen unter anderem der Luftmassenstromwert MSHFM sowie die Lambdawerte $\lambda_{real,k}$ der einzelnen Testschritte ein. Schließlich wird in dem Schritt S3 ein Einspritzdüsendefekt in der Form einer Einspritzmengenabweichung für diejenigen Einspritzdüsen $IN_i$ detektiert, deren Kennlinienabweichung $o_i$ außerhalb eines vorgegebenen Wertbereichs WB liegt. Analog wird ein Einspritzdüsendefekt in der Form einer Einspritzdüsenleckage detektiert, falls der Gesamtleckagestrom $L_{0,sum}$ einen vorbestimmten Schwellwert TH überschreitet. Auf diese Weise kann die Art des Defekts der Einspritzdüsen detektiert werden. Vorzugsweise liegt der Wertebereich WB zwischen $0,8 < o_i < 1,2$. Ferner ist der Schwellwert TH vorzugsweise derart gewählt, dass er bei etwa 0,25% vom erwarteten Kraftstoffstrom des entsprechenden Injektors im aktuellen Testschritt liegt. Als Werte für $gv_i$ werden vorzugsweise Werte im Bereich zwischen 0,65 und 1,4 eingestellt bzw. zusätzlich der Wert $gv_i = 0$, der einem Abschalten des entsprechenden Injektors entspricht.

Um innerhalb der obigen Testschritte TSk eine eindeutige Lösung des Gleichungssystems zu ermitteln, werden die Werte von $gv_i$ vorzugsweise derart gewählt, dass jeder Zylinder nach Durchlaufen der Testschritte zumindest einmal abgeschaltet, einmal abgemagert und einmal angefettet wurde. Ferner enthalten die Testschritte vorzugsweise einen Testschritt, in dem alle Werte von $gv_i$ auf 1 gesetzt wurden. Darüber hinaus folgt vorzugsweise auf einen Testschritt, bei dem zumindest ein Zylinder abgeschaltet wurde, ein Testschritt, bei dem kein Zylinder abgeschaltet wurde. Gegebenenfalls können mit dem obigen Verfahren auch gleichzeitig zwei oder mehr Zylinderbänke eines einzelnen Verbrennungsmotors getestet werden. Dabei ist im Rahmen der Durchführung der Testschritte sicherzustellen, dass zwei Bänke nie gleichzeitig einen Zylinder abschalten. Zum Beispiel kann sich die Testmatrix $M_{gv}$ der einen Zylinderbank durch Permutation der Zeilen der Testmatrix der anderen Zylinderbank ergeben.

In der Ausführungsform der Fig. 1 schließt sich an den Schritt S3 ein weiterer Schritt S4 an, in dem auch noch ermittelt wird, welche Einspritzdüsen $IN_i$ eine Leckage aufweisen, sofern im Schritt S3 eine Einspritzdüsenleckage detektiert wurde. Im Folgenden wird eine Variante zur Durchführung des Schritts S4 erläutert.

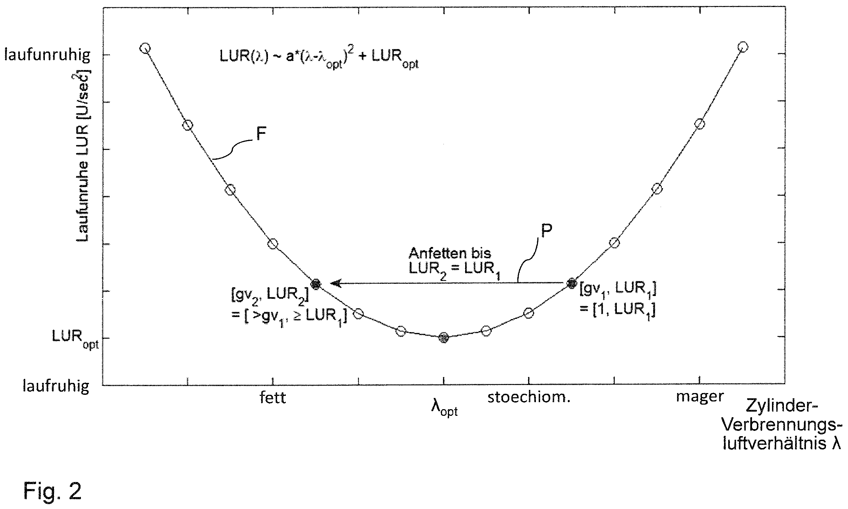

Zur Bestimmung, welche Einspritzdüse entsprechend dem Schritt S4 eine Leckage aufweist, wird ein Messverfahren separat für jede Einspritzdüse durchgeführt, wobei für die Einspritzdüsen, für welche das Verfahren gerade nicht ausgeführt wird, die Gemischvertrimmung auf den Wert 1 gesetzt wird. Im Rahmen der Vermessung der entsprechenden Einspritzdüse wird die Laufunruhe des Verbrennungsmotors für verschiedene Gemischvertrimmungen der Einspritzdüse erfasst. Die Erfassung der Laufunruhe in einem Verbrennungsmotor ist an sich bekannt und wird deshalb nicht weiter im Detail beschrieben. Es wird von der realistischen Annahme ausgegangen, dass die Laufunruhe LUR von

dem Zylinder-Verbrennungsluftverhältnis $\lambda$ des entsprechenden Zylinders, in dem sich die betrachtete Einspritzdüse befindet, im Wesentlichen parabelförmig abhängt. Ohne Beschränkung der Allgemeinheit wird in der hier beschriebenen Ausführungsform der in dem Diagramm der Fig. 2 gezeigte Zusammenhang zwischen der Laufunruhe LUR und dem Zylinder-Verbrennungsluftverhältnis A angenommen. Der Zusammenhang beruht auf einer Funktion F, welches einen minimalen Laufunruhewert $LUR_{opt}$ mit zugeordnetem Zylinder-Verbrennungsluftverhältnis $\lambda_{opt}$ aufweist. Mathematisch wird die Funktion F wie folgt beschrieben:

$$LUR(\lambda) = a \cdot (\lambda - \lambda_{opt})^2 + LUR_{opt}$$

Die Parameter a, $\lambda_{opt}$ und $LUR_{opt}$ sind vorbekannt und wurden für den entsprechenden Verbrennungsmotor z.B. empirisch bestimmt. Im nachfolgenden Verfahren wird lediglich der Parameter $\lambda_{opt}$ benötigt.

Bei der Vermessung der entsprechenden Einspritzdüse wird die Laufunruhe LUR zunächst im Ursprungszustand mit neutraler Gemischvertrimmung $gv_1 = 1$ erfasst. Hier und im Folgenden ist zu beachten, dass die Gemischvertrimmung $gv_1$ bzw. die weiter unten genannte Gemischvertrimmung $gv_2$ nunmehr nicht einen entsprechenden Zylinder indizieren, sondern einen entsprechenden Vertrimmungswert des gerade vermessenen Zylinders. Nach Vermessung des Ursprungszustands wird das mit der Einspritzdüse erzeugte Gemisch sukzessive und schrittweise mittels gv > 1 angefettet und für die entsprechenden Werte von gv wird wiederum die Laufunruhe bestimmt. Mit anderen Worten werden entlang des horizontalen Pfeils P Werte auf der Parabelfunktion F bestimmt. Sobald man erstmalig eine Gemischvertrimmung $gv_2 > 1$ mit Laufunruhe $LUR_2 \geq LUR_1$ erreicht, kann hieraus der Wert $\lambda_1$ des Zylinder-Verbrennungsluftverhältnisses $\lambda$ bei der Gemischvertrimmung $gv_1$ bestimmt werden, wie sich aus nachfolgender Herleitung ergibt.

Aufgrund der Symmetrie der Parabelfunktion F gilt folgender Zusammenhang:

$$\lambda_{opt} - \lambda_2 = \lambda_1 - \lambda_{opt} \qquad (8)$$

Dabei bezeichnet $\lambda_1$ das im Zylinder vorherrschende Verbrennung sluftverhältnis bei der Gemischvertrimmung $gv_1$ und $\lambda_2$ das im Zylinder vorherrschende Verbrennungsluftverhältnis bei der Gemischvertrimmung $gv_2$ des jeweiligen Injektors.

Das Zylinder-Verbrennungsluftverhältnis ändert sich in etwa mit der Gemischvertrimmung, d.h. es gilt:

$$\Delta\lambda = -\Delta gv \Rightarrow \lambda_1 - \lambda_2 = gv_2 - gv_1 \qquad (9)$$

Aus Gleichungen (8) und (9) ergibt sich:

$$\lambda_1 = \lambda_{opt} + \frac{gv_2 - gv_1}{2}$$

Da $gv_1 = 1$ gilt, ergibt sich folgende Bestimmungsgleichung für $\lambda_1$:

$$\lambda_1 = \left(\lambda_{opt} - 0.5\right) + \frac{gv_2}{2} = K + \frac{gv_2}{2} \qquad (10)$$

In dieser Gleichung wurde die Größe K = const. eingeführt, die von $\lambda_{opt}$ abhängt und motorspezifisch ermittelbar ist.

Eine Leckage der vermessenen Einspritzdüse liegt nunmehr dann vor, wenn der Wert $\lambda_1$ bei der Gemischvertrimmung $gv_1 = 1$ zu fett ist. Es wird demzufolge ein geeigneter Schwellwert für $\lambda_1$ festgelegt, bei dessen Unterschreiten ein Leck der entsprechenden Einspritzdüse festgestellt wird. Da $gv_2$ gemäß obiger Gleichung (10) linear von $\lambda_1$ abhängt, wird in der hier beschriebenen Ausführungsform ein mit dem Schwellwert für $\lambda_1$ korrespondierender Schwellwert für $gv_2$ festgelegt. Mit anderen Worten läuft das Verfahren zur Bestimmung von zylinderindividuellen Injektorleckagen derart ab, dass sukzessive durch Veränderung der Gemischvertrimmung ausgehend von $gv_1 = 1$ der Wert $gv_2$ bestimmt wird, bei dem die Laufunruhe des Motors im Wesentlichen der Laufunruhe bei der Gemischvertrimmung $gv_1$ entspricht. Sollte der Wert von $gv_2$ kleiner als ein vorbestimmter Schwellwert sein, wird eine Leckage des entsprechenden Injektors festgestellt. Ist dies nicht der Fall, wird kein Leckagedefekt für diesen Injektor detektiert. Typische Werte für $gv_2$, bei deren Unterschreiten eine Leckage festgestellt wird, liegen zwischen 1,2 und 1,4.

Die im Vorangegangenen beschriebenen Ausführungsformen der Erfindung weisen eine Reihe von Vorteilen auf. Insbesondere ist der durchgeführte Injektortest im Vergleich zu anderen Injektortests spezifischer, denn er ermöglicht eine genaue Aussage über die Art des Defekts. Speziell wird zwischen dem Defekt einer Kraftstoffmengenabweichung bzw. Kennlinienabweichung und dem Defekt einer Leckage unterschieden. Der Injektortest ist dabei systemnah, denn der Injektor wird im eingebauten und unveränderten Zustand während des Motorlaufs beurteilt und nicht im ausgebauten Zustand vermessen. Im Rahmen der Durchführung des Injektortests sind die richtigen motorischen Randbedingungen (Druck, Temperatur, Massenströme, mechanische Spannungen, Transienten und dergleichen) schon eingestellt, so dass der Test gut wiederholbar ist. Darüber hinaus kann der Injektortest schneller und kostengünstiger durchgeführt werden, denn die Injektoren werden im verbauten Zustand analysiert. Der Injektortest ist aussagekräftig, denn er bestimmt nicht nur, ob ein Injektor in Ordnung oder defekt ist, sondern auch die Art des Defekts. Darüber hinaus sind die im Rahmen der Auswertung verwendeten Matrizen-Rechenalgorithmen wesentlich robuster als reine Tabellenvergleiche, wie sie in anderen Injektortests durchgeführt werden. Der Injektortest ist ferner störunanfällig, da deutlich mehr Testschritte (Gleichungen) als unbekannte Variablen verwendet werden können. Mit anderen Worten reagiert die Auswertung bei entsprechend vielen Testschritten deutlich unanfälliger auf Störungen durch statistische Messfehler. Darüber hinaus wird in einer bevorzugten Variante eine symmetrische Vermessung des Injektors gewährleistet, indem im Verlauf der Testschritte jeder Injektor mindestens einmal abgeschaltet, abgemagert und angefettet wird, um auf allen Abschnitten seiner Mengenkennlinie eine Aussage über sein Verhalten zu bekommen.

**Bezugszeichenliste**

| | |
|---|---|
| ZB | Zylinderbank |
| $BK_i$ | Brennkammer |
| M | Anzahl der Einspritzdüsen |
| $IN_i$ | Einspritzdüse |
| $gv_i$ | Gemischvertrimmungen |
| k | Index des Testschritts |
| N | Anzahl der Testschritte |
| $o_i$ | Kennlinienabweichung |
| $L_{0,sum}$ | Gesamtleckagestrom |
| MSHFM | Luftmassenstrom |
| $\lambda_{real,k}$ | im jeweiligen Testschritt gültiger Lambdawert |
| WB | Wertebereich |
| TH | Schwellwert |
| F | Funktion |
| LUR | Laufunruhe |
| A | Zylinder-Verbrennung sluftverhältnis |

**Patentansprüche**

**1.** Verfahren zur Erkennung von defekten Einspritzdüsen ($IN_i$) zur Zuführung von Kraftstoff in die Brennkammern ($BK_i$) eines Verbrennungsmotors, insbesondere in einem Kraftfahrzeug, wobei der Verbrennungsmotor eine oder mehrere Zylinderbänke (ZB) aufweist, wobei eine jeweilige Zylinderbank (ZB) mehrere Zylinder mit jeweils einer darin ausgebildeten Brennkammer ($BK_i$) und zumindest einer Einspritzdüse ($IN_i$) umfasst und wobei den Brennkammern ($BK_i$) einer jeweiligen Zylinderbank (ZB) ein gemeinsamer Luftmassenstrom zugeführt wird und von den Brennkammern ($BK_i$) einer jeweiligen Zylinderbank (ZB) ein gemeinsamer Abgasstrom abgeführt wird, **dadurch gekennzeichnet, dass**:

- für eine jeweilige Zylinderbank (ZB) im Leerlaufbetrieb des Verbrennungsmotors eine Anzahl von aufeinander folgenden Testschritten (TSk) durchgeführt wird, welche größer als die Anzahl der Zylinder der jeweiligen Zylinderbank (ZB) ist, wobei in einem jeweiligen Testschritt (TSk) für die einzelnen Einspritzdüsen ($IN_i$) Gemischfaktoren ($gv_i$) eingestellt sind, welche jeweils den durch die einzelne Einspritzdüse ($IN_i$) bei deren Ansteuerung generierten Kraftstoffmassenstrom festlegen, wobei für zumindest manche aufeinander folgenden Testschritte (TSk) ein oder mehrere Gemischfaktoren ($gv_i$) von einem Testschritt zum nächsten verändert werden und wobei während der Testschritte (TSk) Messungen des Lambdawerts des von der Zylinderbank (ZB) abgeführten Abgasstroms und Messungen des der Zylinderbank (ZB) zugeführten Luftmassenstroms durchgeführt werden;

- nach Durchführung der Anzahl von Testschritten (TSk) ein Normabweichungswert ($o_i$) für jede Einspritzdüse ($IN_i$) sowie ein Gesamtleckagestrom ($L_{0,sum}$) ermittelt werden, wobei der Normabweichungswert ($o_i$) für eine jeweilige Einspritzdüse ($IN_i$) eine Abweichung des durch die jeweilige Einspritzdüse ($IN_i$) erzeugten Kraftstoffmassenstroms von einem Normbetriebswert der jeweiligen Einspritzdüse ($IN_i$) beschreibt und der Gesamtleckagestrom ($L_{0,sum}$) den Kraftstoffmassenstrom beschreibt, der durch Leckagen aller Einspritzdüsen ($IN_i$) der jeweiligen Zylinderbank (ZB) verursacht ist;

- die Ermittlung der Normabweichungswerte ($o_i$) für die jeweiligen Einspritzdüsen ($IN_i$) und des Gesamtleckagestroms ($L_{0,sum}$) derart erfolgt, dass ein Gleichungssystem rechnergestützt gelöst wird, welches für einen jeweiligen Testschritt (TSk) eine Gleichung umfasst, welche die Normabweichungswerte ($o_i$) und den Gesamtleckagestrom ($L_{0,sum}$) in Abhängigkeit von den im jeweiligen Testschritt (TSk) eingestellten Gemischfaktoren ($gv_i$), einem für den jeweiligen Testschritt (TSk) gültigen und aus den Messungen des Lambdawerts abgeleiteten Lambdawert ($\lambda_{real,k}$) und einem für den jeweiligen Testschritt (TSk) gültigen und aus den Messungen des Luftmassenstroms abgeleiteten Luftmassenstrom (MSHFM) beschreibt;

- im Falle, dass zumindest ein Normabweichungswert ($o_i$) für eine jeweilige Einspritzdüse ($IN_i$) außerhalb eines vorbestimmten Wertebereichs (WB) liegt, ein erster Einspritzdüsendefekt in der jeweiligen Zylinderbank (ZB) in der Form einer Einspritzmengenabweichung zumindest einer Einspritzdüse ($IN_i$) detektiert wird und im Falle, dass der Gesamtleckagestrom ($L_{0,sum}$) größer als ein vorbestimmter Schwellwert (TH) ist, ein zweiter Einspritzdüsendefekt in der jeweiligen Zylinderbank (ZB) in der Form einer Leckage zumindest einer Einspritzdüse ($IN_i$) detektiert wird.

2. Verfahren nach Anspruch 1, **dadurch gekennzeichnet, dass** ausgegeben wird, für welche Einspritzdüsen ($IN_i$) der Normabweichungswert ($o_i$) außerhalb des vorbestimmten Wertebereichs (WB) liegt, und diese Einspritzdüsen ($IN_i$) als defekt detektiert werden.

3. Verfahren nach Anspruch 1 oder 2, **dadurch gekennzeichnet, dass** die Normabweichungswerte ($o_i$) jeweils einen prozentualen Faktor darstellen, der durch Multiplikation mit dem Normbetriebswert den durch die jeweilige Einspritzdüse ($IN_i$) erzeugten Kraftstoffmassenstrom liefert.

4. Verfahren nach einem der vorhergehenden Ansprüche, **dadurch gekennzeichnet, dass** die Gemischfaktoren ($gv_i$) jeweils eine Gemischvertrimmung in der Form eines prozentualen Faktors repräsentieren, der durch Multiplikation mit dem von der jeweiligen Einspritzdüse ($IN_i$) im Normalbetrieb des Verbrennungsmotors erzeugten Kraftstoffmassenstrom den tatsächlichen Kraftstoffmassenstrom der jeweiligen Einspritzdüse ($IN_i$) liefert.

5. Verfahren nach einem der vorhergehenden Ansprüche, **dadurch gekennzeichnet, dass** eine jeweilige Gleichung des Gleichungssystems ferner ein gewünschtes Luft-Kraftstoff-Verhältnis bei einer Kraftstoffverbrennung in einer Brennkammer ($BK_i$) umfasst.

6. Verfahren nach einem der vorhergehende Ansprüche, **dadurch gekennzeichnet, dass** eine jeweilige Gleichung des Gleichungssystems ferner einen Gemischanpassungsparameter für jede Einspritzdüse ($IN_i$) umfasst, der den durch die jeweilige Einspritzdüse ($IN_i$) bei deren Ansteuerung generierten Kraftstoffmassenstrom zur Erreichung von Laufruhe des Verbrennungsmotors anpasst.

7. Verfahren nach einem der vorhergehenden Ansprüche, **dadurch gekennzeichnet, dass** eine jeweilige Gleichung des Gleichungssystems wie folgt lautet:

$$\sum_i (gv_i \cdot cb_i \cdot o_i) + \frac{L_{st} \cdot \lambda_{soll} \cdot M}{MSHFM} \cdot L_{0,sum} = \frac{M}{\lambda_{real,k}}$$

wobei i = 1, ..., M die Einspritzdüsen ($IN_i$) aus der Anzahl von M Einspritzdüsen ($IN_i$) der jeweiligen Zylinderbank (ZB) indiziert;

wobei $gv_i$ die im entsprechenden Testschritt (TSk) eingestellten Gemischfaktoren ($gv_i$) in der Form einer Gemischvertrimmung repräsentieren, welche ein prozentualer Faktor ist, der durch Multiplikation mit dem von der jeweiligen Einspritzdüse ($IN_i$) im Normalbetrieb des Verbrennungsmotors erzeugten Kraftstoffmassenstrom den tatsächlichen Kraftstoffmassenstrom der jeweiligen Einspritzdüse ($IN_i$) liefert; wobei alle $cb_i$ auf den Wert 1 gesetzt sind oder wobei ein jeweiliges $cb_i$ ein Gemischanpassungsparameter für eine jeweilige Einspritzdüse ($IN_i$) ist, der den durch die jeweilige Einspritzdüse ($IN_i$) bei deren Ansteuerung generierten Kraftstoffmassenstrom zur Erreichung von Laufruhe des Verbrennungsmotors anpasst; wobei $o_i$ der Normabweichungswert ($o_i$) für eine jeweilige Einspritzdüse ($IN_i$) ist, der einen prozentualen Faktor darstellt, der durch Multiplikation mit dem Normbetriebswert der jeweiligen Einspritzdüse ($IN_i$) den durch die jeweilige Einspritzdüse ($IN_i$) erzeugten Kraftstoffmassenstrom liefert;

wobei $L_{st} \cdot \lambda_{soll}$ ein gewünschtes und für alle Brennkammern ($BK_i$) identisches Luft-Kraftstoff-Verhältnis bei einer Kraftstoffverbrennung in der Brennkammer ($BK_i$) ist und dabei $L_{st}$ das stöchiometrische Luft-Kraftstoff-Verhältnis und $\lambda_{soll}$ einen gewünschten Lambdawert der Kraftstoffverbrennung in der Brennkammer repräsentiert;

wobei MSHFM der für den jeweiligen Testschritt (TSk) gültige Luftmassenstrom (MSHFM) ist;

wobei $L_{0,sum}$ der Gesamtleckagestrom ($L_{0,sum}$) ist;

wobei $\lambda_{real,k}$ der für den jeweiligen Testschritt (TSk) gültige Lambdawert ($\lambda_{real,k}$) ist.

8. Verfahren nach einem der vorhergehenden Ansprüche, **dadurch gekennzeichnet, dass** das Gleichungssystem über eine Matrizenrechnung gelöst wird.

9. Verfahren nach einem der vorhergehenden Ansprüche, **dadurch gekennzeichnet, dass** die Gemischfaktoren ($gv_i$) für die jeweiligen Testschritte (TSk) derart eingestellt sind, dass nach Durchlaufen der Testschritte (TSk) jede Einspritzdüse ($IN_i$) zumindest einmal keinen Kraftstoffmassenstrom erzeugt, zumindest einmal einen Kraftstoffmassenstrom erzeugt, der größer als ein von der jeweiligen Einspritzdüse ($IN_i$) im Normalbetrieb des Verbrennungsmotors erzeugter Kraftstoffmassenstrom ist, und zumindest einmal einen Kraftstoffmassenstrom erzeugt, der kleiner als ein von der jeweiligen Einspritzdüse ($IN_i$) im Normalbetrieb des Verbrennungsmotors erzeugter Kraftstoffmassenstrom ist.

10. Verfahren nach einem der vorhergehenden Ansprüche, **dadurch gekennzeichnet, dass** die Gemischfaktoren ($gv_i$) für die jeweiligen Testschritte (TSk) derart eingestellt sind, dass mindestens ein Testschritt (TSk) existiert, in dem alle Einspritzdüsen ($IN_i$) einen Kraftstoffmassenstrom erzeugen, der einem von der jeweiligen Einspritzdüse ($IN_i$) im Normalbetrieb des Verbrennungsmotors erzeugten Kraftstoffmassenstrom entspricht, und/oder dass auf einen Testschritt (TSk), in dem zumindest eine Einspritzdüse ($IN_i$) keinen Kraftstoffmassenstrom erzeugt, ein Testschritt (TSk) folgt, in dem jede Einspritzdüse ($IN_i$) einen Kraftstoffmassenstrom erzeugt.

11. Verfahren nach einem der vorhergehende Ansprüche, **dadurch gekennzeichnet, dass** im Falle, dass der Gesamtleckagestrom ($L_{0,sum}$) größer als der vorbestimmte Schwellwert (TH) ist, für jede Einspritzdüse ($IN_i$) folgende Schritte durchgeführt werden:

- der Gemischfaktor ($gv_i$) für die jeweilige Einspritzdüse ($IN_i$) wird sukzessive ausgehend von einem Normalwert ($gv_1$), der dem von der jeweiligen Einspritzdüse ($IN_i$) im Normalbetrieb des Verbrennungsmotors erzeugten Kraftstoffmassenstrom entspricht, hin zu Werten mit erhöhtem eingespritzten Kraftstoffanteil der jeweiligen Einspritzdüse ($IN_i$) verändert, wohingegen die Gemischfaktoren ($gv_i$) der anderen Einspritzdüsen ($IN_i$) auf dem Normalwert ($gv_2$) gehalten werden;
- für den Normalwert und jeden veränderten Wert des Gemischfaktors ($gv_i$) der jeweiligen Einspritzdüse ($IN_i$) wird die Laufunruhe (LUR) des Verbrennungsmotors gemessen;
- als ein Zielwert ($gv_2$) des veränderten Gemischfaktors ($gv_i$) wird derjenige Wert des veränderten Gemischfaktors ($gv_i$) bestimmt, bei dem im Wesentlichen die gleiche Laufunruhe wie für den Normalwert ($gv_1$) des Gemischfaktors ($gv_i$) auftritt;
- falls der Zielwert ($gv_2$) außerhalb eines vorgegebenen Wertebereichs liegt, der mit Lambdawerten (A) für den Brennkammer-Abgasstrom korreliert, welche größer als ein vorbestimmter Schwellwert sind, wird die jeweilige Einspritzdüse ($IN_i$) als defekt detektiert, wobei der Brennkammer-Abgasstrom der Abgasstrom der einzelnen Brennkammer ($BK_i$) ist, in der sich die jeweilige Einspritzdüse ($IN_i$) befindet.

12. Verfahren nach Anspruch 11, **dadurch gekennzeichnet, dass** der vorgegebene Wertebereich über eine vorgegebene Funktion (F) bestimmt wird, welche den Zusammenhang zwischen der Laufunruhe (LUR) und dem Lambdawert (A) für den Brennkammer-Abgasstrom bzw. dem Gemischfaktor ($gv_i$) für die jeweiligen Einspritzdüse modelliert, wobei die vorbestimmte Funktion (F) vorzugsweise eine Parabel ist.

13. Motortesteinrichtung zur Erkennung von defekten Einspritzdüsen ($IN_i$) zur Zuführung von Kraftstoff in die Brennkammern ($BK_i$) eines Verbrennungsmotors, insbesondere in einem Kraftfahrzeug, wobei der Verbrennungsmotor eine oder mehrere Zylinderbänke (ZB) aufweist, wobei eine jeweilige Zylinderbank (ZB) mehrere Zylinder mit jeweils einer darin ausgebildeten Brennkammer ($BK_i$) und zumindest einer Einspritzdüse ($IN_i$) umfasst und wobei den

Brennkammern (BK$_i$) einer jeweiligen Zylinderbank (ZB) ein gemeinsamer Luftmassenstrom zugeführt wird und von den Brennkammern (BK$_i$) einer jeweiligen Zylinderbank (ZB) ein gemeinsamer Abgasstrom abgeführt wird, wobei die Motortesteinrichtung zur Durchführung eines Verfahrens eingerichtet ist, bei dem:

- für eine jeweilige Zylinderbank (ZB) im Leerlaufbetrieb des Verbrennungsmotors eine Anzahl von aufeinander folgenden Testschritten (TSk) durchgeführt wird, welche größer als die Anzahl der Zylinder der jeweiligen Zylinderbank (ZB) ist, wobei in einem jeweiligen Testschritt (TSk) für die einzelnen Einspritzdüsen (IN$_i$) Gemischfaktoren (gv$_i$) eingestellt sind, welche jeweils den durch die einzelne Einspritzdüse (IN$_i$) bei deren Ansteuerung generierten Kraftstoffmassenstrom festlegen, wobei für zumindest manche aufeinander folgenden Testschritte (TSk) ein oder mehrere Gemischfaktoren (gv$_i$) von einem Testschritt zum nächsten verändert werden und wobei während der Testschritte (TSk) Messungen des Lambdawerts des von der Zylinderbank (ZB) abgeführten Abgasstroms und Messungen des der Zylinderbank (ZB) zugeführten Luftmassenstroms durchgeführt werden;

- nach Durchführung der Anzahl von Testschritten (TSk) ein Normabweichungswert (o$_i$) für jede Einspritzdüse (IN$_i$) sowie ein Gesamtleckagestrom (L$_{0,sum}$) ermittelt werden, wobei der Normabweichungswert (o$_i$) für eine jeweilige Einspritzdüse (IN$_i$) eine Abweichung des durch die jeweilige Einspritzdüse (IN$_i$) erzeugten Kraftstoffmassenstroms von einem Normbetriebswert der jeweiligen Einspritzdüse (IN$_i$) beschreibt und der Gesamtleckagestrom (L$_{0,sum}$) den Kraftstoffmassenstrom beschreibt, der durch Leckagen aller Einspritzdüsen (IN$_i$) der jeweiligen Zylinderbank (ZB) verursacht ist;

- die Ermittlung der Normabweichungswerte (o$_i$) für die jeweiligen Einspritzdüsen (IN$_i$) und des Gesamtleckagestroms (L$_{0,sum}$) derart erfolgt, dass ein Gleichungssystem rechnergestützt gelöst wird, welches für einen jeweiligen Testschritt (TSk) eine Gleichung umfasst, welche die Normabweichungswerte (o$_i$) und den Gesamtleckagestrom (L$_{0,sum}$) in Abhängigkeit von den im jeweiligen Testschritt (TSk) eingestellten Gemischfaktoren (gv$_i$), einem für den jeweiligen Testschritt (TSk) gültigen und aus den Messungen des Lambdawerts abgeleiteten Lambdawert ($\lambda_{real,k}$) und einem für den jeweiligen Testschritt (TSk) gültigen und aus den Messungen des Luftmassenstroms abgeleiteten Luftmassenstrom (MSHFM) beschreibt;

- im Falle, dass zumindest ein Normabweichungswert (o$_i$) für eine jeweilige Einspritzdüse (IN$_i$) außerhalb eines vorbestimmten Wertebereichs (WB) liegt, ein erster Einspritzdüsendefekt in der jeweiligen Zylinderbank (ZB) in der Form einer Einspritzmengenabweichung zumindest einer Einspritzdüse (IN$_i$) detektiert wird und im Falle, dass der Gesamtleckagestrom (L$_{0,sum}$) größer als ein vorbestimmter Schwellwert (TH) ist, ein zweiter Einspritzdüsendefekt in der jeweiligen Zylinderbank (ZB) in der Form einer Leckage zumindest einer Einspritzdüse (IN$_i$) detektiert wird.

14. Motortesteinrichtung nach Anspruch 13, **dadurch gekennzeichnet, dass** die Motortesteinrichtung zur Durchführung eines Verfahrens nach einem der Ansprüche 2 bis 12 eingerichtet ist.

15. Kraftfahrzeug mit Verbrennungsmotor und Einspritzdüsen (IN$_i$) zur Zuführung von Kraftstoff in die Brennkammern (BK$_i$) des Verbrennungsmotors, **dadurch gekennzeichnet, dass** das Kraftfahrzeug eine Motortesteinrichtung nach Anspruch 13 oder 14 umfasst.

## Claims

1. A method for detecting defective injectors (IN$_i$) for supplying fuel into the combustion chambers (BK$_i$) of an internal combustion engine, especially in a motor vehicle, wherein the internal combustion engine has one or more cylinder banks (ZB), wherein a respective cylinder bank (ZB) comprises a plurality of cylinders with in each case one combustion chamber (BK$_i$) formed therein and at least one injector (IN$_i$), and wherein a common air mass flow is supplied to the combustion chambers (BK$_i$) of a respective cylinder bank (ZB) and a common exhaust stream is removed from the combustion chambers (BK$_i$) of a respective cylinder bank (ZB), **characterised in that**:

- for a respective cylinder bank (ZB) in idling mode of the internal combustion engine, a number of successive test steps (TSk) is carried out which is greater than the number of the cylinders of the respective cylinder bank (ZB), wherein in a respective test step (TSk) mixture factors (gv$_i$) are set for the individual injectors (IN$_i$), which factors in each case determine the fuel mass flow generated by the individual injector (IN$_i$) upon the actuation thereof, wherein for at least some successive test steps (TSk) one or more mixture factors (gv$_i$) is/are changed from one test step to the next and wherein during the test steps (TSk) measurements of the lambda value of the exhaust stream removed from the cylinder bank (ZB) and measurements of the air mass flow supplied to the cylinder bank (ZB) are carried out;

- after carrying out the number of test steps (TSk), a norm deviation value ($o_i$) for each injector ($IN_i$) and also a total leakage flow ($L_{0,sum}$) are ascertained, wherein the norm deviation value ($o_i$) for a respective injector ($IN_i$) describes a deviation of the fuel mass flow produced by the respective injector ($IN_i$) from a norm operating value of the respective injector ($IN_i$), and the total leakage flow ($L_{0,sum}$) describes the fuel mass flow which is caused by leakages of all the injectors ($IN_i$) of the respective cylinder bank (ZB);

- the ascertaining of the norm deviation values ($o_i$) for the respective injectors ($IN_i$) and of the total leakage flow ($L_{0,sum}$) takes place in such a way that a system of equations is solved in computer-aided manner, which system comprises for a respective test step (TSk) an equation which describes the norm deviation values ($o_i$) and the total leakage flow ($L_{0,sum}$) as a function of the mixture factors ($gv_i$) set in the respective test step (TSk), of a lambda value ($\lambda_{real,k}$) valid for the respective test step (TSk) and derived from the measurements of the lambda value and of an air mass flow (MSHFM) valid for the respective test step (TSk) and derived from the measurements of the air mass flow;

- in the event that at least one norm deviation value (oi) for a respective injector ($IN_i$) lies outside a predetermined range of values (WB), a first injector defect in the respective cylinder bank (ZB) in the form of an injection-amount deviation of at least one injector ($IN_i$) is detected, and in the event that the total leakage flow ($L_{0,sum}$) is greater than a predetermined threshold value (TH), a second injector defect in the respective cylinder bank (ZB) in the form of a leakage of at least one injector ($IN_i$) is detected.

2. A method according to Claim 1, **characterised in that** an output is produced as to for which injectors ($IN_i$) the norm deviation value ($o_i$) lies outside the predetermined range of values (WB), and these injectors ($IN_i$) are detected as being defective.

3. A method according to Claim 1 or Claim 2, **characterised in that** the norm deviation values ($o_i$) in each case represent a percentage factor which yields the fuel mass flow produced by the respective injector ($IN_i$) by multiplication by the norm operating value.

4. A method according to one of the preceding claims, **characterised in that** the mixture factors ($gv_i$) represent in each case a mixture trim in the form of a percentage factor which yields the actual fuel mass flow of the respective injector ($IN_i$) by multiplication by the fuel mass flow produced by the respective injector ($IN_i$) in the normal mode of the internal combustion engine.

5. A method according to one of the preceding claims, **characterised in that** a respective equation of the system of equations further comprises a desired air/fuel ratio for fuel combustion in a combustion chamber ($BK_i$).

6. A method according to one of the preceding claims, **characterised in that** a respective equation of the system of equations further comprises a mixture adaptation parameter for each injector ($IN_i$) which adapts the fuel mass flow generated by the respective injector ($IN_i$) upon the actuation thereof in order to achieve smooth running of the internal combustion engine.

7. A method according to one of the preceding claims, **characterised in that** a respective equation of the system of equations reads as follows:

$$\sum_i (gv_i \cdot cb_i \cdot o_i) + \frac{L_{st} \cdot \lambda_{soll} \cdot M}{MSHFM} \cdot L_{0,sum} = \frac{M}{\lambda_{real,k}}$$

wherein i = 1, ..., M indicates the injectors ($IN_i$) of the number of M injectors ($IN_i$) of the respective cylinder bank (ZB);

wherein $gv_i$ represent the mixture factors ($gv_i$) set in the corresponding test step (TSk) in the form of a mixture trim which is a percentage factor which yields the actual fuel mass flow of the respective injector ($IN_i$) by multiplication by the fuel mass flow produced by the respective injector ($IN_i$) in the normal mode of the internal combustion engine;

wherein all the $cb_i$ are set to the value 1 or wherein a respective $cb_i$ is a mixture adaptation parameter for a respective injector ($IN_i$) which adapts the fuel mass flow generated by the respective injector ($IN_i$) upon the actuation thereof to achieve smooth running of the internal combustion engine;

wherein $o_i$ is the norm deviation value ($o_i$) for a respective injector ($IN_i$) which represents a percentage factor which yields the fuel mass flow produced by the respective injector ($IN_i$) by multiplication by the norm operating value of the respective injector ($IN_i$);

wherein $L_{st} \cdot \lambda_{soll}$ is a desired air/fuel ratio, which is identical for all the combustion chambers ($BK_i$), for fuel combustion in the combustion chamber ($BK_i$) and in this case $L_{st}$ represents the stoichiometric air/fuel ratio and $\lambda_{soll}$ a desired lambda value of the fuel combustion in the combustion chamber;

wherein MSHFM is the air mass flow (MSHFM) valid for the respective test step (TSk);

wherein $L_{0,sum}$ is the total leakage flow ($L_{0,sum}$);

wherein $\lambda_{real,k}$ is the lambda value ($\lambda_{real,k}$) valid for the respective test step (TSk).

**8.** A method according to one of the preceding claims, **characterised in that** the system of equations is solved by means of a matrix calculation.

**9.** A method according to one of the preceding claims, **characterised in that** the mixture factors (gvi) for the respective test steps (TSk) are set in such a way that after running through the test steps (TSk) each injector ($IN_i$) at least once does not produce any fuel mass flow, at least once produces a fuel mass flow which is greater than a fuel mass flow produced by the respective injector ($IN_i$) in the normal mode of the internal combustion engine, and at least once produces a fuel mass flow which is less than a fuel mass flow produced by the respective injector ($IN_i$) in the normal mode of the internal combustion engine.

**10.** A method according to one of the preceding claims, **characterised in that** the mixture factors ($gv_i$) for the respective test steps (TSk) are set in such a way that at least one test step (TSk) exists in which all the injectors ($IN_i$) produce a fuel mass flow which corresponds to a fuel mass flow produced by the respective injector ($IN_i$) in the normal mode of the internal combustion engine, and/or **in that** a test step (TSk) in which at least one injector ($IN_i$) does not produce a fuel mass flow is followed by a test step (TSk) in which each injector ($IN_i$) produces a fuel mass flow.

**11.** A method according to one of the preceding claims, **characterised in that** in the event that the total leakage flow ($L_{0,sum}$) is greater than the predetermined threshold value (TH), the following steps are carried out for each injector ($IN_i$):

- the mixture factor ($gv_i$) for the respective injector ($IN_i$), starting from a normal value ($gv_1$) which corresponds to the fuel mass flow produced by the respective injector ($IN_i$) in the normal mode of the internal combustion engine, is successively changed up to values with increased injected fuel component of the respective injector ($IN_i$), whereas the mixture factors (gvi) of the other injectors ($IN_i$) are kept at the normal value ($gv_2$);
- the uneven running (LUR) of the internal combustion engine is measured for the normal value and each changed value of the mixture factor ($gv_i$) of the respective injector ($IN_i$);
- that value of the changed mixture factor ($gv_i$) for which substantially the same uneven running occurs as for the normal value ($gv_i$) of the mixture factor ($gv_i$) is determined as a target value ($gv_2$) of the changed mixture factor ($gv_i$);
- in the event that the target value ($gv_2$) lies outside a specified range of values which correlates with lambda values (A) for the combustion-chamber exhaust stream which are greater than a predetermined threshold value, the respective injector ($IN_i$) is detected as being defective, the combustion-chamber exhaust stream being that exhaust stream of the individual combustion chamber ($BK_i$) in which the respective injector ($IN_i$) is located.

**12.** A method according to Claim 11, **characterised in that** the specified range of values is determined by means of a specified function (F) which models the relationship between the uneven running (LUR) and the lambda value ($\lambda$) for the combustion-chamber exhaust stream or the mixture factor ($gv_i$) for the respective injector, the predetermined function (F) preferably being a parabola.

**13.** An engine testing device for detecting defective injectors ($IN_i$) for supplying fuel into the combustion chambers ($BK_i$) of an internal combustion engine, especially in a motor vehicle, wherein the internal combustion engine has one or more cylinder banks (ZB), wherein a respective cylinder bank (ZB) comprises a plurality of cylinders with in each case one combustion chamber ($BK_i$) formed therein and at least one injector ($IN_i$), and wherein a common air mass flow is supplied to the combustion chambers ($BK_i$) of a respective cylinder bank (ZB) and a common exhaust stream is removed from the combustion chambers ($BK_i$) of a respective cylinder bank (ZB), wherein the engine testing device is set up to carry out a method in which:

- for a respective cylinder bank (ZB) during idling of the internal combustion engine, a number of successive test steps (TSk) is carried out which is greater than the number of the cylinders of the respective cylinder bank (ZB), wherein in a respective test step (TSk) mixture factors ($gv_i$) are set for the individual injectors ($IN_i$), which factors in each case determine the fuel mass flow generated by the individual injector ($IN_i$) upon the actuation

thereof, wherein for at least some successive test steps (TSk) one or more mixture factors ($gv_i$) are changed from one test step to the next and wherein during the test steps (TSk) measurements of the lambda value of the exhaust stream removed from the cylinder bank (ZB) and measurements of the air mass flow supplied to the cylinder bank (ZB) are carried out;

- after carrying out the number of test steps (TSk), a norm deviation value ($o_i$) for each injector ($IN_i$) and also a total leakage flow ($L_{0,sum}$) are ascertained, wherein the norm deviation value ($o_i$) for a respective injector ($IN_i$) describes a deviation of the fuel mass flow produced by the respective injector ($IN_i$) from a norm operating value of the respective injector ($IN_i$), and the total leakage flow ($L_{0,sum}$) describes the fuel mass flow which is caused by leakages of all the injectors ($IN_i$) of the respective cylinder bank (ZB);

- the ascertaining of the norm deviation values ($o_i$) for the respective injectors ($IN_i$) and of the total leakage flow ($L_{0,sum}$) takes place in such a way that a system of equations is solved in computer-aided manner, which system comprises for a respective test step (TSk) an equation which describes the norm deviation values ($o_i$) and the total leakage flow ($L_{0,sum}$) as a function of the mixture factors ($gv_i$) set in the respective test step (TSk), of a lambda value ($\lambda_{real,k}$) valid for the respective test step (TSk) and derived from the measurements of the lambda value and of an air mass flow (MSHFM) valid for the respective test step (TSk) and derived from the measurements of the air mass flow;

- in the event that at least one norm deviation value ($o_i$) for a respective injector ($IN_i$) lies outside a predetermined range of values (WB), a first injector defect in the respective cylinder bank (ZB) in the form of an injection-amount deviation of at least one injector ($IN_i$) is detected, and in the event that the total leakage flow ($L_{0,sum}$) is greater than a predetermined threshold value (TH), a second injector defect in the respective cylinder bank (ZB) in the form of a leakage of at least one injector ($IN_i$) is detected.

14. An engine testing device according to Claim 13, **characterised in that** the engine testing device is set up to carry out a method according to one of Claims 2 to 12.

15. A motor vehicle having an internal combustion engine and injectors ($IN_i$) for supplying fuel into the combustion chambers ($BK_i$) of the internal combustion engine, **characterised in that** the motor vehicle comprises an engine testing device according to Claim 13 or Claim 14.

## Revendications

1. Procédé de détection d'injecteurs défectueux ($IN_i$) pour alimenter en carburant les chambres de combustion ($BK_i$) d'un moteur à combustion interne, notamment d'un véhicule, selon lequel :

    * le moteur à combustion interne comporte un ou plusieurs bancs de cylindres (ZB),
    * chaque banc de cylindres (ZB) comporte plusieurs cylindres avec chaque fois une chambre de combustion ($BK_i$) et au moins un injecteur ($IN_i$), et
    * un débit massique d'air, commun, alimente les chambres de combustion ($BK_i$) de chaque banc de cylindres (ZB) et les chambres de combustion ($BK_i$) de chaque banc de cylindres (ZB) émettent un débit commun de gaz d'échappement,

    procédé **caractérisé en ce que**

    - pour chaque banc de cylindres (ZB), en mode de ralenti du moteur à combustion interne, on effectue un certain nombre d'étapes d'essai successives (TSk) qui est supérieur au nombre de cylindres du banc de cylindres respectif (ZB),

        * dans chaque étape d'essai (TSk) respective, pour les différents injecteurs ($IN_i$), on règle des coefficients de mélange ($gv_i$) qui fixent respectivement le débit massique de carburant généré par la commande des différents injecteurs ($IN_i$),
        * pour au moins certaines étapes d'essai successives (TSk), on modifie un ou plusieurs coefficients de mélange ($gv_i$) d'une étape d'essai à la suivante, et
        * pendant les étapes d'essai (TSk), on effectue des mesures du coefficient lambda du débit de gaz d'échappement sortant du banc de cylindres (ZB) et des mesures du débit massique d'air alimentant le banc de cylindres (ZB),

    - après avoir exécuté le nombre d'étapes d'essai (TSk), on détermine un écart normal ($o_i$) pour chaque injecteur

(IN$_i$) ainsi que le débit total de fuite (L$_{0,sum}$),

* l'écart normal (o$_i$) d'un injecteur (IN$_i$) respectif décrivant l'écart du débit massique de carburant généré par cet injecteur (IN$_i$) respectif par rapport à la valeur en fonctionnement normal de cet injecteur (IN$_i$) et le débit total de fuite (L$_{0,sum}$) décrit le débit massique total occasionné par les fuites de tous les injecteurs (IN$_i$) du banc de cylindres (ZB) respectif,

- on détermine les écarts normaux (o$_i$) des injecteurs respectifs (IN$_i$) et le débit total de fuite (L$_{0,sum}$) en résolvant par le calcul, un système d'équations qui comprend, pour l'étape d'essai respective (TSk), une équation décrivant les écarts normaux (o$_i$) et le débit total de fuite (L$_{0,sum}$) en fonction des coefficients de mélange (gvi) réglés pour l'étape d'essai (TSk) respective, d'un coefficient lambda ($\lambda_{real,k}$) valable pour l'étape d'essai respective (TSk) et qui a été déduit des mesures du coefficient lambda ainsi que d'un débit massique d'air (MSHFM) valable pour l'étape d'essai (TSk) respective et qui a été déduit des mesures du débit massique d'air,
- au cas où au moins un écart normal (o$_i$) d'un injecteur (IN$_i$) respectif est à l'extérieur d'une plage de valeurs (WB) prédéfinies, on détecte un premier défaut d'injecteur dans le banc de cylindres (ZB) respectif sous la forme d'un écart de quantité injectée par au moins un injecteur (IN$_i$), et dans le cas où le débit total de fuite (L$_{0,sum}$) est supérieur à un seuil (TH) prédéfini, on détecte un second défaut d'injecteur dans le banc de cylindres (ZB) respectif sous la forme d'une fuite d'au moins un injecteur (IN$_i$).

**2.** Procédé selon la revendication 1,
**caractérisé en ce qu'**
on signale les injecteurs (IN$_i$), pour lesquels l'écart normal (o$_i$) se situe à l'extérieur de la plage des valeurs (WB) prédéfinies et on détecte ces injecteurs (IN$_i$) comme défectueux.

**3.** Procédé selon la revendication 1 ou 2,
**caractérisé en ce que**
les écarts normaux (o$_i$) représentent chacun un coefficient en pourcentage qui, multiplié avec la valeur en fonctionnement normal, donne le débit massique de carburant généré par l'injecteur respectif (IN$_i$).

**4.** Procédé selon l'une des revendications précédentes,
**caractérisé en ce que**
les coefficients de mélange (gv$_i$) représentent chaque fois un réglage de mélange sous la forme d'un coefficient en pourcentage qui, multiplié par le débit massique de carburant généré par l'injecteur (IN$_i$) respectif, en mode de fonctionnement normal du moteur à combustion, donne le débit massique de carburant effectif de cet injecteur (IN$_i$).

**5.** Procédé selon l'une des revendications précédentes,
**caractérisé en ce qu'**
une équation respective du système d'équations comprend en outre un rapport air/carburant souhaité pour la combustion de carburant dans une chambre de combustion (BK$_i$).

**6.** Procédé selon l'une des revendications précédentes,
**caractérisé en ce qu'**
une équation respective du système d'équations comprend en outre un paramètre d'adaptation de mélange pour chaque injecteur (IN$_i$) qui adapte par la commande de l'injecteur (IN$_i$) respectif, le débit massique de carburant généré pour atteindre la stabilité de marche du moteur à combustion interne.

**7.** Procédé selon l'une des revendications précédentes,
**caractérisé en ce que**
l'équation respective du système d'équations s'énonce comme suit :

$$\sum_i \left( gv_i \cdot cb_i \cdot o_i \right) + \frac{L_{st} \cdot \lambda_{soll} \cdot M}{MSHFM} \cdot L_{0,sum} = \frac{M}{\lambda_{real,k}}$$

dans laquelle :

- i = 1...M est l'indice des injecteurs (IN$_i$) du nombre M d'injecteurs (IN$_i$) du banc de cylindres (ZB) respectif,
- gv$_i$ représente les coefficients de mélange (gv$_i$) réglés dans l'étape d'essai (TSk) respective sous la forme d'un réglage de mélange qui est un coefficient en pourcentage qui, multiplié par le débit massique de carburant généré par l'injecteur respectif ($IN_i$) en mode de fonctionnement normal du moteur à combustion interne, donne le débit massique effectif de carburant par cet injecteur ($IN_i$),

- tous les $cb_i$ sont mis à la valeur 1 ou un $cb_i$ respectif est un paramètre d'adaptation de mélange d'un injecteur ($IN_i$) respectif qui adapte le débit massique de carburant généré par la commande de l'injecteur ($IN_i$) respectif pour arriver à la stabilité de marche du moteur à combustion interne,

- $o_i$ représentant l'écart normal ($o_i$) de l'injecteur ($IN_i$) respectif qui est un coefficient en pourcentage qui, multiplié par la valeur en fonctionnement normal de l'injecteur ($IN_i$) respectif, donne le débit massique de carburant généré par l'injecteur ($IN_i$) respectif,

- $L_{st} \cdot \lambda_{soll}$ représentant le rapport air/carburant souhaité, identique pour toutes les chambres de combustion ($BK_i$) pour la combustion du carburant dans les chambres de combustion ($BK_i$), $L_{st}$ étant le rapport stoechiométrique air/carburant et $\lambda_{soll}$ représentant le coefficient lambda souhaité pour la combustion du carburant dans la chambre de combustion,

- MSHFM étant le débit massique d'air (MSHFM) valable pour l'étape d'essai (TSk) respective,

- $L_{0,sum}$ étant le débit total de fuite ($L_{0,sum}$),

- $\lambda_{real,k}$ étant la valeur valable du coefficient lambda ($\lambda_{real,k}$) pour l'étape d'essai (TSk) respective.

8. Procédé selon l'une des revendications précédentes, **caractérisé en ce que** le système d'équations est résolu par un calcul matriciel.

9. Procédé selon l'une des revendications précédentes, **caractérisé en ce que** les coefficients de mélange ($gv_i$) des étapes d'essai (TSk) respectives sont réglés pour que, par l'exécution des étapes d'essai (TSk), chaque injecteur ($IN_i$), au moins une fois, ne génère pas de débit massique de carburant, au moins une fois génère, un débit massique de carburant supérieur à un débit massique de carburant généré par l'injecteur ($IN_i$) respectif en mode de fonctionnement normal du moteur à combustion interne et au moins une fois, un débit massique de carburant inférieur au débit massique de carburant généré par l'injecteur ($IN_i$) respectif en mode de fonctionnement normal du moteur à combustion interne.

10. Procédé selon l'une des revendications précédentes, **caractérisé en ce que** les coefficients de mélange ($gv_i$) des étapes d'essai respectives (TSk) sont réglés pour qu'il existe au moins une étape d'essai (TSk) dans laquelle tous les injecteurs ($IN_i$) génèrent un débit massique de carburant qui correspond au débit massique de carburant généré par l'injecteur ($IN_i$) respectif en mode de fonctionnement normal du moteur à combustion interne et/ou **en ce qu'**une étape d'essai (TSk) dans laquelle au moins un injecteur ($IN_i$) ne génère pas de débit massique de carburant, est suivie par une étape d'essai (TSk) dans laquelle chaque injecteur ($IN_i$) génère un débit massique de carburant.

11. Procédé selon l'une des revendications précédentes, **caractérisé en ce que** dans le cas où le débit total de fuite ($L_{0,sum}$) est supérieur à un seuil prédéfini (TH), on effectue les étapes suivantes pour chaque injecteur ($IN_i$) :

- on modifie le coefficient de mélange ($gv_i$) de l'injecteur ($IN_i$) respectif en partant successivement d'une valeur normale ($gv_i$) qui correspond au débit massique de carburant généré par l'injecteur ($IN_i$) respectif en mode de fonctionnement normal du moteur à combustion interne, jusqu'à des valeurs correspondant à une fraction plus importante de carburant injecté par l'injecteur ($IN_i$) respectif alors que les coefficients de mélange ($gv_i$) des autres injecteurs ($IN_i$) sont maintenus à la valeur normale ($gv_2$),

- pour la valeur normale et pour chaque valeur modifiée du coefficient de mélange ($gv_i$) de l'injecteur ($IN_i$) respectif, on mesure la stabilité de marche (LUR) du moteur à combustion interne,

- comme valeur cible ($gv_2$) du coefficient de mélange modifié ($gv_i$), on détermine la valeur respective du coefficient de mélange modifié ($gv_i$) pour lequel on a pratiquement le même fonctionnement calme que pour la valeur normale ($gv_i$) du coefficient de mélange ($gv_i$),

- au cas où la valeur cible ($gv_2$) est à l'extérieur de la plage de valeurs prédéfinies, qui est en corrélation avec les valeurs lambda ($\lambda$) pour le débit de gaz d'échappement des chambres de combustion, qui sont plus grandes qu'un seuil prédéfini, on considère l'injecteur ($IN_i$) respectif comme défectueux,

* le débit de gaz d'échappement des chambres de combustion étant le débit des gaz d'échappement de l'unique chambre de combustion (BKi) dans laquelle se trouve l'injecteur (IN$_i$) respectif.

**12.** Procédé selon la revendication 11,
   **caractérisé en ce que**
   la plage de valeurs est prédéfinie par une fonction prédéfinie (F) représentant la relation entre la stabilité de marche (LUR) et le coefficient lambda ($\lambda$) pour le débit de gaz d'échappement de la chambre de combustion ou le coefficient de mélange (gv$_i$) modélisé pour l'injecteur respectif,

   * la fonction prédéfinie (F) étant de préférence une fonction parabolique.

**13.** Installation d'essai de moteur pour détecter des injecteurs défectueux (IN$_i$) alimentant en carburant les chambres de combustion (BK$_i$) d'un moteur à combustion interne, notamment d'un véhicule automobile,

   * le moteur à combustion interne ayant un ou plusieurs bancs de cylindres (ZB),
   * chaque banc de cylindres (ZB) ayant plusieurs cylindres avec chaque fois une chambre de combustion (BK$_i$) et au moins un injecteur (IN$_i$), et
   * les chambres de combustion (BK$_i$) de chaque banc de cylindres (ZB) recevant un débit massique d'air commun et les chambres de combustion (BK$_i$) de chaque banc de cylindres (ZB) générant un débit de gaz d'échappement commun,
   * l'installation d'essai de moteur étant conçue pour exécuter un procédé selon lequel :

   - pour chaque banc de cylindres (ZB), en mode de ralenti du moteur à combustion interne, on effectue un certain nombre d'étapes d'essai successives (TSk) qui est supérieur au nombre de cylindres du banc de cylindres (ZB) respectif,

   * dans chaque étape d'essai (TSk) respective pour les différents injecteurs (IN$_i$), on règle des coefficients de mélange (gv$_i$) qui fixent respectivement le débit massique de carburant généré par la commande des différents injecteurs (IN$_i$),
   * pour au moins certaines étapes d'essai successives (TSk), on modifie un ou plusieurs coefficients de mélange (gv$_i$) d'une étape d'essai à la suivante, et
   * pendant les étapes d'essai (TSk), on effectue des mesures du coefficient lambda du débit de gaz d'échappement sortant du banc de cylindres (ZB) et des mesures du débit massique d'air alimentant le banc de cylindres (ZB),

   - après avoir exécuté le nombre d'étapes d'essai (TSk), on détermine un écart normal (o$_i$) pour chaque injecteur (IN$_i$) ainsi que le débit total de fuite (L$_{0,sum}$),

   * l'écart normal (o$_i$) d'un injecteur (IN$_i$) respectif décrivant l'écart du débit massique de carburant généré par cet injecteur (IN$_i$) respectif, par rapport à la valeur en fonctionnement normal de cet injecteur (IN$_i$) et le débit total de fuite (L$_{0,sum}$) décrit le débit massique total occasionné par les fuites de tous les injecteurs (IN$_i$) du banc de cylindres (ZB) respectif,

   - on détermine les écarts normaux (o$_i$) des injecteurs respectifs (IN$_i$) et le débit total de fuite (L$_{0,sum}$) en résolvant par le calcul, un système d'équations qui comprend pour l'étape d'essai respective (TSk), une équation décrivant les écarts normaux (o$_i$) et le débit total de fuite (L$_{0,sum}$) en fonction des coefficients de mélange (gv$_i$) réglés pour l'étape d'essai (TSk) respective, d'un coefficient lambda ($\lambda_{real,k}$) valable pour l'étape d'essai respective (TSk) et qui a été déduit des mesures du coefficient lambda ainsi que d'un débit massique d'air (MSHFM) valable pour l'étape d'essai (TSk) respective et qui a été déduit des mesures du débit massique d'air,
   - au cas où au moins un écart normal (o$_i$) d'un injecteur (IN$_i$) respectif est à l'extérieur d'une plage de valeurs (WB) prédéfinies, on détecte un premier défaut d'injecteur dans le banc de cylindres (ZB) respectif sous la forme d'un écart de quantité injectée par au moins un injecteur (IN$_i$), et dans le cas où le débit total de fuite (L$_{0,sum}$) est supérieur à un seuil (TH) prédéfini, on détecte un second défaut d'injecteur dans le banc de cylindres (ZB) respectif sous la forme d'une fuite d'au moins un injecteur (IN$_i$).

**14.** Installation d'essai de moteur selon la revendication 13,
   **caractérisée en ce que**

l'installation d'essai de moteur est conçue pour exécuter un procédé selon l'une des revendications 2 à 12.

15. Véhicule automobile équipé d'un moteur à combustion interne et d'injecteurs ($IN_i$) pour alimenter en carburant les chambres de combustion ($BK_i$) du moteur à combustion interne,
   **caractérisé en ce que**
   le véhicule automobile comporte une installation d'essai selon la revendication 13 ou la revendication 14.

Zylinderbank ZB mit M Brennkammern BK$_i$ (i= 1, ..., M), wobei jeweils eine Einspritzdüse IN$_i$ pro Brennkammer BK$_i$ vorgesehen ist — ST

Einstellen von Gemischvertrimmungen gv$_i$ der Einspritzdüsen IN$_i$ und Messen des Luftmassenstroms und des Lambdawerts der Zylinderbank ZB — TSk

k = 1, ..., N;  N > M

Bestimmung der Kennlinienabweichung o$_i$ jedes Injektors IN$_i$ und des Gesamtleckagestroms L$_{0,sum}$ der Zylinderbank ZB durch Lösen eines Gleichungssystems unter Berücksichtigung des Luftmassenstroms MSHFM und der Lambdawerte $\lambda_{real,i}$ — S2

Detektieren eines Einspritzsdüsendefekts in der Form einer Einspritzmengenabweichung für diejenigen Einspritzdüsen IN$_i$, deren Kennlinienabweichung o$_i$ außerhalb eines vorgegebenen Wertebereichs WB liegt, und Detektieren eines Einspritzdüsendefekts in der Form einer Einspritzdüsenleckage, falls der Gesamtleckagestrom L$_{0,sum}$ einen vorbestimmten Schwellwert TH überschreitet — S3

Bestimmen, welche Einspritzdüsen IN$_i$ eine Leckage aufweisen, falls in Schritt S3 eine Einspritzdüsenleckage detektiert wird — S4

Fig. 1

Fig. 2

EP 3 194 750 B1

**IN DER BESCHREIBUNG AUFGEFÜHRTE DOKUMENTE**

**In der Beschreibung aufgeführte Patentdokumente**

- DE 19620038